# EUROPÄISCHE PATENTSCHRIFT

(11) **EP 2 268 929 B1**
(45) Veröffentlichungstag und Bekanntmachung des Hinweises auf die Patenterteilung: **15.05.2013**
(21) Anmeldenummer: 09727988.9
(22) Anmeldetag: 03.04.2009
(51) Int. Cl.: F16B 5/06, F16B 5/08

(54) **HALTEVORRICHTUNG FÜR AUSKLEIDUNGSMATERIALIEN**
HOLDING DEVICE FOR LINING MATERIALS
DISPOSITIF DE FIXATION DE MATÉRIAUX DE GARNITURE

(30) Priorität: 04.04.2008 DE 102008017516; 19.06.2008 DE 102008028815
(43) Veröffentlichungstag der Anmeldung: 05.01.2011
(73) Patentinhaber: Plasticon Germany GmbH, 46539 Dinslaken (DE)
(72) Erfinder: VAN LAAK, Hermann, 46569 Hünxe (DE)
(74) Vertreter: Demski, Siegfried
(86) Internationale Anmeldenummer: PCT/DE2009/000434
(87) Internationale Veröffentlichungsnummer: WO 2009/121345

(56) Entgegenhaltungen:
- WO-A1-03/004883
- GB-A- 1 222 829
- US-A- 5 298 098

## Beschreibung

Die Erfindung betrifft eine Haltevorrichtung zur Fixierung eines Auskleidungsmaterials an einer Wandfläche, insbesondere einer Behälter-, Apparate- oder Anlagenwand, welches an der Wandfläche mittels Abstandshalter festlegbar ist.

Gattungsgemäße Haltevorrichtungen werden beispielsweise zur Auskleidung von Behältern benötigt, die entweder aus Metall oder einem nicht kompatiblen Kunststoff oder GFK gefertigt sind. Die hierbei verwendeten Materialien sind in der Regel nicht säurebeständig oder unrein, sodass eine zusätzliche säurebeständige und/oder hochreine Auskleidung der Behälter erforderlich ist. Die hierbei vorgesehenen Auskleidungsmaterialien werden als Innenverkleidung überall dort eingesetzt, wo infolge von großen Temperaturschwankungen eine Schockwirkung durch Abkühlen der Außenmaterialien entstehen kann und Risse oder Undichtigkeit hervorgerufen werden. Ferner wird eine Auskleidung dort erforderlich, wo mit korrosiven Gasen oder flüssigen Substanzen gearbeitet wird und die Gehäusewandungen diesen Gasen beziehungsweise Flüssigkeiten ausgesetzt sind. Zum Wärme- und Korrosionsschutz der Wände, die sehr häufig Strömungsbereiche mit Querschnitten von 100 m² und mehr aufweisen, werden die den Strömungsbereichen zugewandten Innenflächen daher mit Korrosionsschutzfolien aus Kunststoff verkleidet. Hierbei gelangt insbesondere der Kunststoff MFA, PFA oder FEP in Folienform zur Anwendung, weil dieser Kunststoff einen ausreichenden Korrosionsschutz bietet und zugleich für eine gute Isolierung gegen Thermoschock verwendet werden kann. Darüber hinaus sind Auskleidungsfolien für hochreine Behälter (Semiconductor) und für hochbeständige Behälter (Chemie) sowie für Kolonnen und andere Apparate (Chemie) notwendig.

Damit ein umfassender Korrosionsschutz der Behälter gewährleistet ist, werden diese mit Auskleidungsmaterialien, vorzugsweise Kunststoffbahnen, vollflächig ausgekleidet, wobei die Auskleidungsmaterialien über eine Vielzahl von Befestigungs- oder Fixpunkten punktuell an der Wandfläche des Behälters gehalten werden. Die erforderlichen Befestigungs- oder Fixpunkte sind hierbei an der Innenwand des Behälters befestigt und werden zur Aufhängung genutzt, wobei üblicherweise pro m² nur wenige Befestigungspunkte vorgesehen sind. Die Befestigungs- oder Fixpunkte bestehen nach dem bekannten Stand der Technik aus Metallbolzen oder ähnlichen Metallteilen, welche mit der Gehäusewandung verbunden sind. Beispielsweise können Befestigungs- oder Fixpunkte aus Metall mit der Gehäuswandung verschraubt, verklebt oder verschweißt werden. Alternativ kommt der Einsatz von Kunststoffmaterialien in Betracht, welche in der Regel in gleicher Weise befestigt werden, wobei es auf das Material der Gehäusewandung ankommt, welche Befestigungsart gewählt wird. Kunststoffmaterialien weisen in der Regel eine höhere chemische Resistenz als metallische Standardlösungen auf, sodass die Befestigungspunkte meistens nachträglich zusätzlich mit einer Folie abgedeckt werden müssen, wenn offen liegende unreine Kunststoffe oder Metallteile in den Innenraum des Behälters ragen. Hierdurch ist ein erhöhter Arbeitsaufwand erforderlich. Die zur Verfügung gestellten Kunststofffolien werden nur in bestimmten Bahnbreiten geliefert und daher besteht die Notwendigkeit die Auskleidungsmaterialien zusätzlich entlang der Bahnenkanten miteinander, beispielsweise durch Schweißnähte, zu verbinden.

Alternativ werden nicht schweißbare Schälfolien verwendet, welche in bestimmten Bahnbreiten hergestellt werden können und zwischen Flanschstücken eingeklemmt werden. Hierdurch ist die Baulänge der Behälterwandungen jedoch äußerst begrenzt und erfordert eine Vielzahl von Flanschverbindungen, wodurch die Kosten erheblich steigen und einen hohen technischen Aufwand für die Verschraubung der Flanschabschnitte erfordern.

Aus der WO 03/004883 A1 ist ein Befestigungselement sowie ein Verfahren zu seiner Herstellung und die Verwendung bekannt. Die in den Ausführungsbeispielen gezeigten Befestigungselemente dienen zur Befestigung wenigstens eines flächenförmigen Bauteils in einem Abstand zu einem Trägerkörperteil. Es handelt sich um Schraubverbindungen, die jedoch bei Kunststofffolien aufgrund der erforderlichen Dichtigkeit nicht verwendet werden können.

Aus dem britischen Patent 1 222 829 sind ebenfalls Befestigungselemente bekannt, welche zum Verbinden zweier beabstandeter Platten vorgesehen sind.

Ebenso ist aus dem US-Patent 5,298,098 eine Befestigungsmöglichkeit bekannt, um zueinander beabstandete Platten miteinander zu verbinden. Die weiterhin aufgezeigten Lösungen sind ebenfalls nicht geeignet, um eine Befestigung von Auskleidungsmaterialien in Behältern vorzunehmen.

Aufgrund der unterschiedlichen zum Einsatz kommenden Materialien für die Wandflächen besteht die Aufgabe der vorliegenden Erfindung darin eine sichere Befestigungsmethode für Auskleidungsmaterialen aufzuzeigen, um eine dauerhaft haltbare Verbindung herzustellen, die allen korrosiven Angriffen standhält.

Erfindungsgemäß ist zur Lösung der Aufgabe vorgesehen, dass die Abstandshalter zumindest teilweise aus Kunststoff bestehen und mit einer ersten Kontaktfläche mit der Wandfläche und mit einer zweiten Kontaktfläche mit dem Auskleidungsmaterial verschweißbar sind. Weitere vorteilhafte Ausgestaltungen der Erfindung ergeben sich aus den Unteransprüchen.

Durch die alleinige Verwendung von Kunststoff für die Abstandshalter wird das Problem einer Zerstörung durch korrosive Gase infolge Permeation oder Flüssigkeiten bei Leckagen vermieden, wobei durch eine Verschweißung der Abstandshalter einerseits mit der Wandfläche und andererseits mit dem Auskleidungsmaterial eine hochfeste und widerstandfähige Verbindung geschaffen wird. Vorzugsweise wird hierbei eine Verschweißung mit Hilfe von elektromagnetischer Strahlung vorgenommen, wobei einerseits die Abstandshalter aus einem Kunststoffmaterial bestehen und andererseits die Wandfläche oder das Auskleidungsmaterial ebenfalls aus einem Kunststoff besteht, sodass im Falle einer ausreichenden Kompatibilität die Kunststoffe unmittelbar miteinander verschweißt werden können. Zu diesem Zweck ist ein Teil der verwendeten Kunststoffmaterialien entweder mit einer absorbierenden Beschichtung versehen oder mit absorbierenden Partikeln angereichert. Soweit ein Behälter beispielsweise aus einem Metall gefertigt wurde oder aus einem Kunststoffmaterial besteht, welches nicht verschweißbar ist, zum Beispiel GFK, erfolgt eine zusätzliche Auskleidung der Behälterinnenwände mit einer Kunststoffschicht, welche einerseits zum weiteren Schutz des Behälters dient und andererseits zum Verschweißen mit den Abstandshaltern geeignet ist. Die verwendeten Auskleidungsmaterialien aus Kunststoff können anschließend nach dem Befestigen der Abstandshalter ebenso mit diesen verschweißt werden, sodass in dem jeweiligen Behälter zusätzlich zur Außenwand eine zweite innen liegende Wand vorhanden ist, welche aus dem Auskleidungsmaterial besteht und beabstandet zur eigentlichen Behälterwand angeordnet ist. Durch die Verwendung von kompatiblen Kunststoffmaterialien können diese unmittelbar miteinander verschweißt werden, wobei die hierzu verwendeten Abstandshalter mit einer ersten Kontaktfläche einerseits mit der Wandfläche und mit einer zweiten Kontaktfläche andererseits mit dem Auskleidungsmaterial verschweißbar sind. Sofern die verwendeten Kunststoffmaterialien nicht zueinander kompatibel, dass heißt verschweißbar sind, besteht des Weiteren die Möglichkeit einen zweiteiligen Abstandshalter vorzusehen, welcher einerseits kompatibel zur Wandfläche und andererseits kompatibel zum Auskleidungsmaterial ist, wobei durch eine geeignete Kopplungsschicht eine Verbindung der zweiteiligen Ausführung des Abstandshalters gewährleistet ist.

Es besteht bei einer zweiteiligen Ausführungsform der Abstandshalter aber auch die Möglichkeit, dass ein Abstandsteil aus Metall und ein weiteres Abstandsteil aus Kunststoff gefertigt ist und durch Formschluss miteinander verbunden ist. Bei einer derartigen Lösung besteht somit die Möglichkeit die Wandung auch aus Metall zu fertigen und eine Verschweißung mit einem Abstandsteil nach herkömmlichen Verfahren vorzunehmen, während das zweite Abstandsteil, in der Regel aus Kunststoff besteht und somit mit dem Auskleidungsmaterial direkt verschweißt werden kann, wobei vorzugsweise eine Verschweißung mit Hilfe von elektromagnetischer Strahlung erfolgt.

Die Abstandshalter selbst weisen eine erste Kontaktfläche auf einer Stirnfläche der Abstandshalter auf, welche beispielsweise dazu dient die Abstandshalter mit der Wand zu verbinden. Eine zweite Kontaktfläche liegt auf einer diametral gegenüber liegenden Stirnfläche der Abstandshalter oder einer hierzu parallelen Fläche. Im einfachsten Fall kann somit das Auskleidungsmaterial auf die Abstandshalter aufgelegt und mit diesen verschweißt werden, wodurch der besondere Vorteil erzielt wird, dass das Auskleidungsmaterial vollflächig und ohne Unterbrechung verarbeitet werden kann und somit die Gefahr eines Durchdringens des Auskleidungsmaterials im Bereich der Abstandshalter nahezu ausgeschlossen werden kann, weil das Auskleidungsmaterial aus einer glatten Fläche besteht. Eine alternative Ausführungsform sieht vor, dass die Auskleidungsmaterialien mit Durchbrüchen versehen sind, durch die die Abstandshalter hindurch geführt werden können, sodass das Auskleidungsmaterial auf eine Innenfläche, welche parallel zur äußeren Stirnfläche verläuft, mit den Abstandshaltern verbunden werden kann. Bei dieser Lösung, welche in besonderen Fällen zum Einsatz kommt, kann gegebenenfalls der Abstandshalter zusätzlich mit einem aufgeklebten oder aufgeschweißten Auskleidungsmaterial abgedeckt werden.

In vorteilhafter Ausgestaltung sind die verwendeten Abstandshalter entweder rund oder oval ausgebildet oder können alternativ als Streifen verwendet werden, welche auf der zum Auskleidungsmaterial ausgerichteten Kontaktfläche zumindest abschnittsweise mit einer absorbierenden Schicht versehen sind. Eine absorbierende Schicht wird bevorzugt eingesetzt, da diese mit Hilfe geeigneter elektromagnetischer Strahlung durch die erfolgende Absorbtion und Plastifizierung miteinander verschweißbar sind, wobei das Auskleidungsmaterial selbst für elektromagnetische Strahlung transparent ausgebildet ist. Die Art und Form der Abstandshalter richtet sich nach den örtlichen Gegebenheiten, der vorhandenen Behältergröße und den auftretenden Zugspannungen auf die Auskleidungsmaterialien, sodass wahlweise auch die Dimensionierung der einzelnen Abstandshalter geändert werden kann.

Die zur Wandfläche ausgerichtete Kontaktfläche der Abstandshalter kann hierbei zumindest abschnittsweise mit einer absorbierenden Schicht versehen sein, ebenso wie die äußere Kontaktfläche, wobei vorzugsweise die äußere Kontaktfläche nicht vollflächig mit einer absorbierenden Schicht versehen ist, sondern beispielsweise nur partiell eine solche absorbierende Schicht aufweist, damit in einem Arbeitsgang von der Innenseite des Behälters her durch elektromagnetische Strahlung eine Verschweißung sowohl mit der Wandfläche als auch mit dem Auskleidungsmaterial erfolgen kann.

Durch die partielle Anordnung der absorbierenden Schicht auf der äußeren Kontaktfläche, also der Fläche die dem Auskleidungsmaterial zugewandt ist, kann somit die elektromagnetische Strahlung zwischen den absorbierenden Schichten hindurch treten und zur zweiten Kontaktfläche, welche wandseitig ausgerichtet ist, gelangen. Soweit elektromagnetisch absorbierende Schichten aufgetragen werden, können diese beispielsweise im Koextrusionsverfahren aufgetragen werden, und zwar vollflächig oder in Streifenform oder es kann bei einer vollflächigen Auftragung durch anschließende mechanische Bearbeitungsvorgänge zumindest ein Teil der absorbierenden Beschichtung wieder entfernt werden, um die erforderliche Durchstrahlung der elektromagnetischen Strahlung zu gewährleisten.

In weiterer Ausgestaltung der Erfindung ist vorgesehen, dass die Abstandshalter im Querschnitt ein U-Profil, ein U-Profil mit auslaufenden Schenkelenden und innen liegenden oder außen liegenden Kontaktflächen, ein T-Profil, ein Trapezprofil, ein V-Profil mit breiter Basisfläche und auslaufenden Schenkelenden oder, ein Hutprofil bilden oder aus einem vorzugsweise vollflächigen Rechteckprofil oder quadratischen Profil bestehen.

Abstandshalter können demzufolge in unterschiedlichsten Profilformen zum Einsatz gelangen, wobei vorzugsweise runde Ausführungen oder streifenförmige Ausführungen verwendet werden. Ein U-Profil ermöglicht beispielsweise eine Verbindung der Basis mit der Wandfläche, während die Stirnflächen der Schenkel mit dem Auskleidungsmaterial verbunden werden können. Soweit ein U-Profil mit auslaufenden Schenkelenden verwendet wird, können die Schenkelenden zur Verbindung mit dem Auskleidungsmaterial verwendet werden, wobei dieses innen liegend oder außen liegend angeordnet sein kann. Ähnlich sieht es bei der Verwendung eines T-Profils aus, welches mit seinem Fußende mit der Wandfläche verbunden werden kann, während der obere Abschnitt mit der Außenseite oder mit der parallel hierzu verlaufenden Innenfläche zur Verbindung mit dem Auskleidungsmaterial herangezogen werden kann. Alternativ besteht die Verwendung in Form eines Trapezprofiles, welches ebenfalls im mittleren Bereich mit der Wand und mit dem Trapezende mit dem Auskleidungsmaterial verbindbar ist. Ebenso kommt die Verwendung eine V-Profils mit breiter Basisfläche und auslaufenden Schenkeln in Betracht, da die Basisfläche zur Verbindung mit der Wandfläche geeignet ist, während die auslaufenden Schenkelenden mit ihren flachen Seiten zur Anlage des Auskleidungsmaterials verwendet werden können. Gleiches gilt für ein Hutprofil. In vereinfachter Form besteht darüber hinaus die Möglichkeit ein vollflächiges Rechteckprofil oder quadratisches Profil einzusetzen, welches auf den parallelen Außenflächen jeweils mit zumindest einer teilweise absorbierenden Beschichtung versehen ist, die eine Verschweißung mit der Wandfläche und dem Auskleidungsmaterial ermöglicht. Bei der Verwendung eines Rechteckprofils oder eines quadratischen Profils besteht jedoch die Notwendigkeit die nach innen zeigende Fläche nur partiell mit einer absorbierenden Schicht zu versehen, da ansonsten eine Verschweißung mit der Wandfläche größere Probleme bereiten könnte. Vorzugsweise werden hierbei für die Abstandshalter elektromagnetisch durchlässige Kunststoffmaterialien, dass heißt in der Regel lichtdurchlässige Materialien eingesetzt. Ebenso werden für die Auskleidungsmaterialien lichtdurchlässige Kunststoffe verwendet, während hingegen die Behälterwand oder Behälterbeschichtung aus einem elektromagnetische Strahlung absorbierenden Kunststoffmaterial bestehen kann.

In weiterer besonderer Ausgestaltung der Erfindung ist vorgesehen, dass die Abstandshalter zweiteilig ausgebildet sind, wobei ein erstes Abstandsteil mit der Wandfläche und ein zweites Abstandsteil mit dem Auskleidungsmaterial verbunden ist und beide Abstandsteile durch ein Kopplungselement miteinander verbunden sind. Vorzugsweise wird eine derartige Lösung verwendet, wenn nicht kompatible Kunststoffmaterialien für die Wandfläche und das Auskleidungsmaterial zum Einsatz kommen. Hier werden die jeweiligen Abstandsteile in entsprechender kompatibler Form zu den verwendeten Kunststoffen verwendet und mit Hilfe der Kopplungsschicht untereinander verbunden. Die Kopplungsschicht kann beispielsweise aus einer Klebeschicht bestehen oder es besteht die Möglichkeit eine form- und/oder kraftschlüssige Verbindung vorzusehen. Besonders bevorzugt besteht hierbei die Möglichkeit, dass die Kopplungselemente aus einer verpressbaren schwalbenschwanzförmigen Verzahnung oder ähnlichen Verzahnungen bestehen, sodass die beiden Abstandsteile miteinander verpresst werden können, wobei es insbesondere nicht auf eine Kompatibilität der verwendeten Kunststoffe ankommt und somit die Abstandsteile einerseits an die Wandfläche und andererseits an das Auskleidungsmaterial adaptierbar sind.

Soweit ein Form- oder Kraftschluss der Kopplungselemente vorgesehen ist, können diese T-förmig, pilz-förmig, U-förmig mit auslaufenden Schenkeln, tellerförmig oder wellenförmig ausgebildet sein, wobei die jeweiligen Kopplungselemente, das heißt die beiden Abstandsteile miteinander verhakt, verklemmt oder formschlüssig verbunden werden und gleichzeitig einerseits mit der Wandfläche und andererseits mit dem Auskleidungsmaterial verschweißt werden. Beispielsweise kann ein T-förmiges Kopplungselement in einer Stufenbohrung einer Scheibe aufgenommen sein und wandseitig verschweißt werden, während die Scheibe mit dem Auskleidungsmaterial verschweißt wird, sodass die beiden verwendeten Kopplungselemente selbst nicht miteinander verschweißt werden müssen und über einen Formschluss gehalten sind. Als weitere Alternative kommen S-förmig oder winkelförmig ausgebildete Kopplungselemente infrage, welche ebenfalls wiederum rund oder streifenförmig ausgebildet sein können, die miteinander verhakt oder verklemmt sind.

Die zur Verbindung vorgesehene Wandfläche kann beispielsweise aus einem kaschierten, vorzugsweise dünnem Kunststoffmaterial bestehen, welches auf einer Metallaußenwand oder einer GFK-Wand aufgeklebt wird. Somit besteht die Möglichkeit die Abstandshalter unmittelbar mit der Wandfläche beziehungsweise dem Kunststoffmaterial zu verschweißen. Alternativ besteht die Möglichkeit, dass die Wandfläche selbst aus einer stabilen Kunststoffaußenwand besteht und somit eine direkte Verschweißung ermöglicht wird, insbesondere unter zu Hilfenahme zweiteiliger Abstandshalter, welche auf die verwendeten weiteren Kunststoffmaterialien abgestimmt sind.

In besonderer Ausgestaltung der vorliegenden Erfindung wird durch die Abstandshalter ein Zwischenraum zwischen der Wandfläche und dem Auskleidungsmaterial geschaffen, welcher beispielsweise als Leckageraum angesehen werden kann und somit eine Undichtigkeit in dem Auskleidungsmaterial mit einem Austritt eines Mediums, welches durch ein erstes Auskleidungsmaterial hindurchtritt, durch geeignete Sensoren detektiert werden kann. Durch Absaugen oder einen Spülvorgang kann das ausgetreten Medium entfernt werden. Darüber hinaus bietet der Zwischenraum die Möglichkeit, dass sich das Auskleidungsmaterial entsprechend der vorherrschenden Temperaturen ausdehnen kann und entstehende Über- oder Unterdrücke ausgeglichen werden können.

Vorzugsweise werden bei der vorliegenden Erfindung die Abstandshalter aus einem lichttransparenten Kunststoffmaterial hergestellt, sodass mit Hilfe von elektromagnetischer Strahlung eine Verschweißung der Kunststoffmaterialien beziehungsweise der absorbierenden Schicht mit der Wandfläche oder dem Auskleidungsmaterial ermöglicht wird. Zu diesem Zweck wird vorzugsweise die Wandfläche aus einem lichtabsorbierenden Kunststoffmaterial hergestellt oder es wird eine Wandfläche aus einem Kunststoffmaterial verwendet, das zusätzlich mit einer absorbierenden Beschichtung versehen ist. Das Auskleidungsmaterial wird demgegenüber aus einem lichttransparenten Kunststoffmaterial gefertigt, damit eine nachträgliche Verschweißung mit Hilfe von elektromagnetischer Strahlung ermöglicht wird. In einem solchen Fall kann die Kontaktfläche der Abstandshalter mit einer lichtabsorbierenden Schicht versehen sein oder es wird ein lichtabsorbierender Abstandshalter verwendet, welcher durch seine Formgebung die Bestrahlung der hinteren Kontaktfläche zur Wandfläche hin gewährleistet.

Durch diese Lösungen wird sichergestellt, dass die Abstandshalter mit der Wandfläche und/oder dem Auskleidungsmaterial durch elektromagnetische Strahlung verbindbar sind und somit mit Hilfe der Verschweißung eine dauerhafte Verbindung gewährleistet und darüber hinaus ein rationelles Arbeiten ermöglicht wird.

Für die Wandfläche und das Auskleidungsmaterial werden hauptsächlich Standardthermoplaste verwendet, vorzugsweise PE, PP, PE-UHMW oder teilfluorierte Thermoplaste, vorzugsweise PVDF, E-CTFE oder hochfluorierte Thermoplaste, vorzugsweise FEP, MFA, PFA oder modifiziertes PTFE, wobei die absorbierende Beschichtung aus gleichen Kunststoffmaterialien oder bei PE-UHMW und modifiziertem PTFE aus artverwandten Kunststoffmaterialien besteht.

Die zum Einsatz kommenden Kunststoffmaterialen können thermostabile Additive in Form von Partikeln aufweisen, welche lasersensitiv oder infrarotsensitiv sind und aus organischen und anorganischen Materialien mit einer Mindesttemperaturstabilität bestehen, wobei die Temperatur den Verarbeitungstemperaturen der verwendeten Kunststoffmaterialien entspricht und wobei die Additive in Abhängigkeit des Wärmeeinwirkungsverfahrens beispielsweise aus Farbmitteln in Form von Farbstoffen oder Farbpigmenten, wie Rußteilchen oder Glimmer mit Zinn-Antimonbeschichtung, bestehen können, um eine Absorbtion der elektromagnetischen Strahlung zu ermöglichen.

Die in der Beschichtung absorbierenden thermostabilen Additive bestehen hauptsächlich ebenfalls aus infrarotsensitiven oder lasersensitiven Partikeln, vorzugsweise organischen oder anorganischen Materialien mit einer Mindesttemperaturstabilität, die den Verarbeitungstemperaturen der verwendeten Kunststoffmaterialien entsprechen und in Abhängigkeit des Wärmeeinwirkungsverfahrens, beispielsweise aus Farbpigmenten, wie Rußteilchen oder Glimmer mit Zink-Antimonbeschichtung bestehen. Ähnlich verhält es sich mit den absorbierenden Kunststoffmaterialien die auf die Wandfläche aufgeklebt werden. Auch bei diesen Kunststoffmaterialien werden entsprechende thermostabile Partikel wie bei der absorbierenden Beschichtung eingesetzt. Die hierbei verwendeten Kunststoffmaterialen und Beschichtungen absorbieren elektromagnetische Strahlung im Wellenlängenbereich von 150 bis 2.500 Nanometer, vorzugsweise 500 bis 1.500 Nanometer, besonders bevorzugt von 800 bis 1.000 Nanometer.

Für den Fall, dass nicht kompatible Kunststoffmaterialien zum Einsatz kommen, können die Abstandshalter zwei- oder mehrteilig ausgebildet sein. Für eine Verbindung zwischen den einzelnen Abstandsteilen eines Abstandshalters können Kopplungselemente verwendet werden. Zur Erhöhung der Festigkeit der zumindest zweiteiligen Abstandshalter können die Kopplungselemente auf ihrer Außenseite eine strukturierte Oberfläche als haftvermittelnde Verbindungsschicht aufweisen, sodass ein besonders inniger Verbund zwischen den Kopplungsteilen und den jeweiligen Abstandsteilen erzielt wird, wobei eine die elektromagnetische Strahlung absorbierende Beschichtung zumindest abschnittsweise in Richtung auf das Auskleidungsmaterial ausgerichtet ist. Ähnlich verhält es sich, wenn das Abstandsteil mit einer aus Kunststoff bestehenden Wandfläche verbunden werden soll.

Alternativ besteht ferner die Möglichkeit, dass die Kopplungselemente zwei- oder mehrteilig ausgebildet sind, wobei die haftvermittelnde Verbindungsschicht und zumindest eine, die elektromagnetische Strahlung absorbierende Beschichtung ein- oder mehrlagig, vorzugsweise verdrillt, verdreht oder geflochten aufgelegt ist. Die Kopplungselemente können auf ihrer Außenseite haftvermittelnde Zusätze, beispielsweise textile Strukturen wie Gewebe, Gewirke, Vliese oder Gestricke aus E-Glas oder ECR-Glas, C-Fasern, Aramidfasern, Polyester oder Polyacrylnitril, oder andere synthetische Fasern oder solche aus Kunststoffmaterialien, vorzugsweise mit einer polymeren Matrix aus gleichen oder artverwandten Kunststoffen wie das Auskleidungsmaterial, aufweisen. Alternativ können die Kopplungselemente auf ihrer Außenseite haftvermittelnde Zusätze in Form von Hybridbändern, Hybridkordeln oder Hybridgarnen aufweisen, welche aus elektromagnetische Strahlung absorbierenden oder nicht absorbierenden polymeren Bändern und anorganischen Faserbündeln, vorzugsweise C-Fasem, Glasfasern, Silikatfasern oder Aramidfasern, bestehen, wobei die Verstärkungsfasern mit Harz miteinander verklebbar sind.

Die haftvermittelnde Verbindungsschicht ist hierbei in der Regel in dem Material eines Abstandsteils eingebettet und steht zumindest teilweise aus der Oberfläche hervor, sodass ein zweites Abstandsteil nach teilweiser Plastifizierung auf die haftvermittelnde Verbindungsschicht aufgepresst werden kann und nach erfolgter Abkühlung zu einer besonders innigen Verbindung führt. Hierbei weist das Material des ersten Abstandsteils eine höhere Schmelztemperatur als das zweite Abstandsteil auf, sodass ein Herauslösen der Verbindungsschicht infolge der Erwärmung ausgeschlossen werden kann.

Für die Plastifizierung der absorbierenden Kunststoffmaterialien oder Beschichtungen wird als elektromagnetische Strahlungsquelle ein Festkörperlaser, ein Gaslaser, ein Halbleiterlaser, eine Infrarotlichtquelle, beispielsweise eine Xenon-Kurzbogenlampe, verwendet oder ein CO₂-Laser eingesetzt.

Beim Induktionsschweißen wird die zum Schweißen notwendige Wärme mittels eines alternierenden Magnetfeldes in die Fügezone eingetragen. Die Hauptphasen dieses Verfahrens sind Aufheizen, Konsolidieren unter Druck sowie Abkühlen, wobei die Haupteinflussparameter durch die Vorschubgeschwindigkeit, den Konsolidierungsdruck und die Temperaturen der Fügezone bestimmt sind. Beim Verschweißen von Kunststoffmaterialien ist ein Schweißzusatzstoff erforderlich, der die Energie eines elektromagnetischen Feldes in Wärme umsetzt. Dieser Schweißzusatzstoff, im Weiteren als Füllstoff bezeichnet, bleibt dauerhaft in der Schweißzone.

Als mögliche Füllstoffe kommen unter anderem ferromagnetische Stoffe infrage, wobei insbesondere die Verwendung von Nanopartikeln oder Mahlgut möglich ist. Als Nanopartikel oder Nanoteilchen bezeichnet man einen Verbund von wenigen bis einigen tausend Atomen oder Molekülen. Der Name hat hierbei einen direkten Bezug auf deren Größe die typischerweise bei 1 bis 100 Nanometern liegt. Nanopartikel können sowohl auf natürlichem Wege als durch synthetische Verfahren hergestellt werden, die gezielt mit neuen Eigenschaften oder Funktionalitäten ausgestattet sind, wie zum Beispiel elektrische Leitfähigkeit, chemische Reaktivität. Synthetische Nanopartikel können entsprechend ihrer chemischen und physikalischen Eigenschaften untergliedert werden. In der Forschung und Anwendung sind folgende Gruppen verbreitet:
Kohlenstoffhaltige Nanopartikel, Metalloxide, Titandioxid, Aluminiumoxid, Eisenoxid, Zinkoxid sowie Zeolithe und andere auf Silizium basierende mesoporöse Materialien wie MCM-41 oder SBA-15, Halbleiter, Metalle, Metallsulfide und Polymere wie Dendrimere und Blockcopolymere, wobei die kohlenstoffhaltigen Nanopartikel in unterschiedlichen Formen vorliegen können, beispielsweise als Fullerene, Nanoröhrchen oder Cabon black (Rußpartikel).

Die Nanopartikel oder das Mahlgut kann eine thermische Anregung durch ein Magnetfeld oder ein elektrisches Feld erfahren, wobei ein Magnetfeld eine Bewegung der Nanopartikel in einem Stoff hervorruft, während elektrische Felder eine Anregung der Elektronen hervorrufen. Beide Maßnahmen führen zu einer Erwärmung der Nanopartikel oder des Mahlguts aufgrund der entstehenden Reibung.

Eine Ummagnetisierung eines magnetisierten ferromagnetischen Stoffes erfolgt bei normalen Materialien mit vielen Weiss'schen Bezirken durch die Verschiebung der Potentialwälle zwischen den einzelnen Domänen, dass heißt die magnetischen Momente können sich an den Grenzen des einen Weiss'schen Bereichs annähern und gehören dann zur benachbarten Domäne. Sinkt nun die Größe der Teilchen unterhalb der Größe der Weiss'schen Bereiche besteht der betreffende Partikel nur aus einem Weiss'schen Bereich. In solchen "Single domain particels" ist eine Verschiebung eines Potentialwalls nicht möglich, da kein Wall zwischen zwei Domänen besteht und es somit keine Wahrscheinlichkeit für ein antiparallel ausgerichtetes atomares magnetischen Moment gibt. Dass heißt in Einzeldomänenpartikeln können sich die Spins nur kollektiv ändern, was sich in einer sehr hohen Koerzivitätsfeldstärke niederschlägt.

Kristallite von Ferromagnetika kann man sich aus Domänen zusammengesetzt vorstellen. Innerhalb dieser Domänen oder Weiss'schen Bezirke sind die atomaren magnetischen Momente parallel ausgerichtet. Das Volumen der Weiss'schen Bereiche liegt typischerweise bei 10⁻⁴ bis 10⁻⁶ mm³.

Bringt man einen ferromagnetischen Stoff in ein äußeres Magnetfeld, so richten sich die magnetischen Momente der Weiss'schen Bezirke parallel zum äußeren Magnetfeld aus. Es erfolgt demzufolge eine Magnetisierung. Die Magnetisierung wächst mit steigender Feldstärke des äußeren Magnetfeldes bis zu einer Sättigungsfeldstärke, bei der eine vollständige Ausrichtung der Elektronenspins erreicht ist. Lässt man anschließend die Feldstärke des äußeren Magnetfeldes wieder bis auf null sinken, folgt die Magnetisierung nicht der ursprünglichen Kurve, sondern entlang einer Hysterese-Schleife. Bei der Feldstärke = 0 bleibt eine mehr oder weniger starke Remanenzmagnetisierung erhalten, sodass der ferromagnetische Stoff in einen Permanentmagneten umgewandelt wird. Erst bei Erreichen der Koerzivitätsfeldstärke, die antiparallel zur Magnetisierung des Stoffes ausgerichtet ist, geht die Magnetisierung der Probe auf null zurück. Steigt die Feldstärke des äußeren Magnetfeldes weiter bis auf einen Wert an, so wird die negative Sättigungsmagnetisierung erreicht. Verringert man nun wieder die Feldstärke, dreht deren Richtung um und vergrößert sie dann sukzessive. Diese Eigenschaften sind ferromagnetischen Stoffen imanent, wobei durch die Änderung des Magnetfeldes beispielsweise mit Hilfe einer Induktionsspule diese Möglichkeit zur Erwärmung ferromagnetischer Stoffe ausgenutzt werden kann. Hierbei können die ferromagnetischen Stoffe aus beispielsweise einem metallischen Mahlgut bestehen oder es können Nanopartikel eingesetzt werden, die weitere positive Eigenschaften aufweisen. Grundsätzlich ist von einer anderen Isotropie magnetischer Nanopartikel auszugehen und dies hat einen großen Einfluss auf deren Koerzivität. Bei magnetischen Nanopartikel spielen hauptsächlich die Kristalle und Partikelformationsisotropie eine Rolle. Aber auch Anisotropien, die durch Austausch zwischen dem Kern und der Hülle verursacht werden, dürfen im Einzelfall nicht vernachlässigt werden. Magnetokristalline Anisotropie wird durch die Orbitalspin-Kopplung und die energetisch bevorzugte Ausrichtung der Magnetisierung entlang einer bevorzugten Achse verursacht. Die Koerzivitätsfeldstärke eines Nanophasenmaterials ist proportional zur Anisotropie, sodass diese Materialien als Füllstoffe für Induktionsschweißungen verwendet werden können. Eine polykristalline Probe von Füllstoffen besitzt aufgrund der willkürlichen Orientierung der Teilchen keine Nettoanisotropie. Jedoch können nicht sphärische Teilchen eine Partikelforman-isotropie zeigen, da es leichter ist ein zylindrisches Teilchen entlang der Kante als entlang der kurzen Kante zu magnetisieren. Die Abweichung von der sphärischen Form muss nicht besonders stark ausgeprägt sein, so bewirkt eine Abweichung von 1,1 bis 1,5% von der Kugelform schon eine Vervierfachung der Koerzivitätsfeldstärke.

Besonders interessant in diesem Zusammenhang sind die Eigenschaften von Nanopartikeln, welche magnetisch, ferrimagnetisch, ferromagnetisch, antiferromagnetisch oder supraparamagnetisch sein können. Der Superparamagnetismus in Nanopartikeln wird durch das Absinken des Teilchenvolumens weiter begründet, sodass die atomaren magnetischen Momente immer stärker durch die thermische Bewegung der Teilchen beeinflusst werden und sich nicht weiter parallel ausrichten können. Es kommt zu Superparamagnetismus. Superparamagnetische Teilchen verhalten sich genauso wie paramagnetische Teilchen, jedoch haben sie ein erheblich größeres magnetisches Moment. Unterhalb einer sogenannten Blocktemperatur verhalten sich diese Stoffe wieder ferromagnetisch. Superparamagnetische Stoffe zeigen keine Hystereseschleife, sodass sie experimentell leicht von ferromagnetischen Teilchen unterschieden werden können. Die Eigenschaft der Nanopartikel hängt jedoch zum Beispiel von der erwähnten Blocktemperatur und von der Form der Teilchen ab. Beispielsweise können stäbchenförmige magnetische Nanopartikel mit einer Abmessung von 2 x 10 nm eine Blocktemperatur von nur 110 K besitzen, kugelförmige Teilchen mit einem Durchmesser von 2 nm jedoch eine von 12 K.

Bei der Synthese von magnetischen Nanopartikeln wird man vor eine Reihe von Problemen gestellt. Um ein einheitliches Verhalten der Nanopartikel zu erhalten ist es von essentieller Wichtigkeit, einige Parameter möglichst genau zu steuern. Zum Einen ist es wünschenswert eine möglichst enge Größenverteilung der Partikel zu erhalten, da das magnetische Verhalten von Nanopartikeln maßgeblich durch deren Größe bestimmt wird. Durch gängige Syntheseverfahren kann man die Größenverteilung nur bis auf eine Abweichung von etwa 10% einengen. Im Allgemeinen werden jedoch Fraktionen benötigt, deren Abweichung in der Größenverteilung bei weniger als 5% liegen. Ein gängiges Verfahren ist die fraktionierte Flockung, durch Zugabe eines reinen Lösungsmittels zu einer Probe von Nanopartikeln von unterschiedlicher Größe konglomerieren die größten Partikel, da diese die größten van der Waals Anziehungskräfte besitzen. Das Konglomerat kann dann durch Zentrifugieren abgetrennt und der Vorgang wiederholt werden.

Ein weiterer Parameter ist die Kristallinität der Produkte. Wünschenswert ist eine hohe Kristallinität, um eine möglichst hohe Magnetisierung zu erreichen. Aber auch die Beeinflussung der Kristallstruktur ist ein wichtiger Parameter, da man über ihn die Anisotropie der magnetischen Nanopartikel steuern kann. Im Allgemeinen erreicht man sowohl die Erhöhung der Kristallinität als auch die Beeinflussung der Kristallstruktur durch einen kontrollierten Alterungsprozess, den man zum Beispiel durch Erwärmen auf eine bestimmte Temperatur über eine gewisse Dauer erreichen kann. Zur Herstellung der einzelnen Nanopartikeln sind verschiedene Verfahren bekannt, auf die hier nicht im Einzelnen eingegangen werden kann.

Zur Verbindung unterschiedlichster Kunststoffmaterialien ist die Verwendung von Nanopartikeln als Füllstoff mit ihren magnetischen, ferrimagnetischen, ferromagnetischen, antiferromagnetischen oder supraparamagnetische Eigenschaften besonders geeignet, wobei der Füllstoff nanoskalige, magnetische oder oxidische Partikel enthält, die aus aggregierten Primärpartikeln bestehen können oder wobei der Füllstoff aus Ferriten, Oxiden oder Metallmischoxiden bestehen kann. Die Teilchengröße liegt typischerweise zwischen 1 und 500 nm, insbesondere zwischen 2 und 100 nm.

Eine Anregung der Nanopartikeln kann beispielsweise durch Mikrowellenstrahlung mit einer Frequenz von 1,5 bis 10 GHz, vorzugsweise im Bereich von 2 bis 3 GHz erfolgen, jedoch sind andere elektromagnetische Strahlungen ebenfalls verwendbar, durch welche die Eigenschaften der Nanopartikel als Füllstoffe ebenfalls ausgenutzt werden können und zu einer Erwärmung der zu verschweißenden Materialien, vorzugsweise Kunststoffmaterialien, führt.

Alternativ zu den Nanopartikeln können verschiedene Metalle als Mahlgut den Kunststoffmaterialien in angereicherter Form zugegeben werden, sodass mit Hilfe eines elektromagnetischen Feldes unter Berücksichtigung der sich durch die Feldänderung ergebenden Bewegungen innerhalb des angereicherten Materials zu einer Erwärmung führen und somit zur Verschweißung verschiedener Kunststoffmaterialien herangezogen werden können. Hierbei sollte eine elektromagnetische Strahlung verwendet werden, welche typischer Weise im Resonanzbereich der verwendeten Nanopartikel oder des Mahlgutes liegt, um einen hohen Energieeintrag zu erzielen, wobei durch gezielte Zugabe von Nanopartikeln eine Änderung der Resonanzfrequenz erfolgen kann.

Der besondere Vorteil von Nanopartikeln oder Mahlgut besteht hierbei darin, dass auf die Verwendung von transparenten Kunststoffmaterialien verzichtet werden kann und stattdessen gegebenenfalls preiswertes Kunststoffmaterial mit entsprechender Anreicherung verwendet werden kann. Hierbei reichen Anreicherungen von Nanopartikeln von typischerweise 1 bis 5%, vorzugsweise 2 bis 3%, aus, um mit Hilfe einer Induktionsvorrichtung oder einer Mikrowellenbestrahlung eine Verschweißung durchzuführen. Die Verwendung von Mahlgut, insbesondere fein gemahlenem Metall (Metallstaub) ist ebenfalls aufgrund der Dipolwirkung für Compounds geeignet. Insbesondere wird im Weiteren durch die Mikrowellenbestrahlung oder Induktionsschweißung aufgrund der verwendeten Energiequellen eine hohe Arbeitssicherheit gewährleistet.

Die Erfindung wird im Weiteren anhand der Figuren näher erläutert.

Es zeigt
- Fig. 1: in einer geschnittenen Seitenansicht einen Abstandshalter zur Verbindung eines Auskleidungsmaterials mit einer Wandfläche, sowie in zwei Draufsichten unterschiedliche Ausführungsformen der Abstandshalter,
- Fig. 2: in drei geschnittenen Seitenansichten verschiedene Ausführungsformen von Abstandshaltern, wie sie zur Verbindung von Auskleidungsmaterialien und Wandfläche geeignet sind,
- Fig. 3: in zwei geschnittenen Seitenansichten die Verwendung eines rechteckförmigen Abstandshalters zur Verbindung des Auskleidungsmaterials mit der Wandfläche,
- Fig. 4: in zwei geschnittenen Seitenansichten weitere Abstandshalter, welche aus unterschiedlichen Kunststoffmaterialien bestehen und über eine Kopplungsschicht miteinander verbunden sind,
- Fig. 5: in einer geschnittenen Seitenansicht die Verwendung eines rechteckförmigen Streifens als Abstandshalter mit absorbierenden Beschichtungen,
- Fig. 6: in einer geschnittenen Seitenansicht die Verwendung zweier Abstandshalterteile, welche miteinander verpresst sind,
- Fig. 7: ein Ausführungsbeispiel zur Verwendung zweier Abstandsteile die aus unterschiedlichen Kunststoffmaterialien bestehen und mittels Formschluss eine Verbindung zwischen den Auskleidungsmaterialien und der Wandfläche herstellen,
- Fig. 8: eine geschnittene Seitenansichten eines weiteren Abstandshalters, welcher aus zwei korrespondierenden Abstandsteilen besteht,
- Fig. 9: eine geschnittene Seitenansichten einer weiteren Variante der zweiteiligen Ausführungsform des Abstandshalters,
- Fig. 10: in einer geschnittenen Seitenansicht eine weitere Ausführungsvariante,
- Fig. 11: in einer geschnittenen Seitenansicht eine weitere Ausführungsvariante,
- Fig. 12: in einer geschnittenen Seitenansicht eine weitere Ausführungsvariante,
- Fig. 13: in einer geschnittenen Seitenansicht eine alternative Ausführungsform eines einteiligen Abstandshalters,
- Fig. 14: in einer Teilansicht die Befestigung eines Auskleidungsmaterials an einer Behälterwandung,
- Fig. 15: in einer geschnittenen Seitenansicht eine weitere Ausführungsform,
- Fig. 16: in einer geschnittenen Seitenansicht die Befestigung zweier Inlinerfolien über Abstandshalter und
- Fig. 17: in einer geschnittenen Seitenansicht und einer Draufsicht die Befestigung einer Inlinerfolie über einen zweiteiligen Abstandshalter.

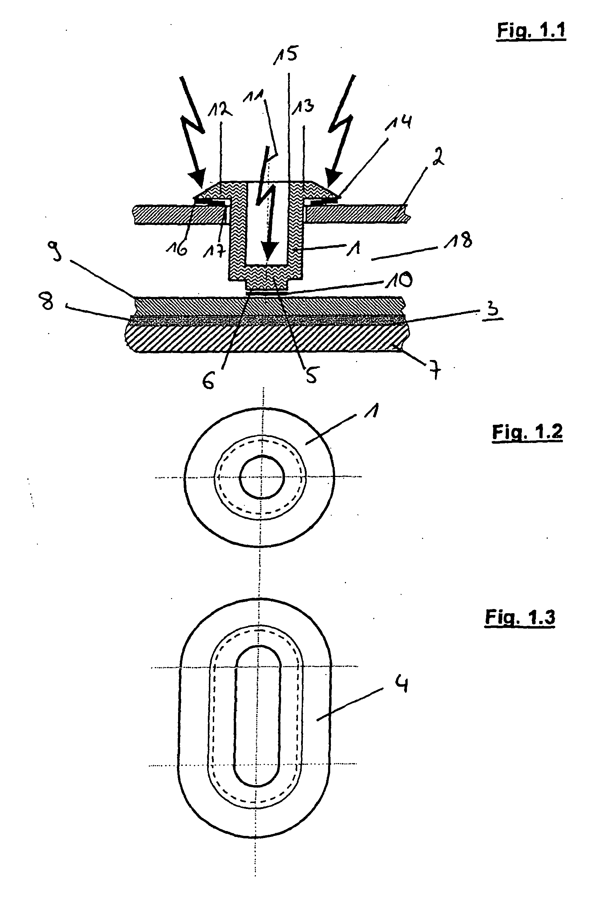

Figur 1 zeigt in einer geschnittenen Seitenansicht einen Abstandshalter 1, welcher zur Verbindung eines Auskleidungsmaterials 2 mit einer Wandfläche 3 vorgesehen ist. In zwei Draufsichten sind mögliche Formen des in der geschnittenen Seitenansicht gezeigten Abstandshalters 1 dargestellt, und zwar in einer ersten Darstellung ein Abstandshalter 1 in einer runden Ausführungsvariante und in der weiteren Draufsicht einen Abstandshalter 4 in einer ovalen Ausführungsform. Die Querschnittsform der beiden unterschiedlichen Abstandshalter 1 und 4 entspricht der geschnittenen Seitenansicht. Die Form der verwendeten Abstandshalter 1 oder 4 hängt von dem Einsatzzweck ab und den möglicherweise entstehenden Belastungen durch das aufgeschweißte Auskleidungsmaterial 2.

In der geschnittenen Seitenansicht ist erkennbar, dass der Abstandshalter 1 U-förmig ausgebildet ist und mit seiner Basis 5 mit einer ersten Kontaktfläche 6 unmittelbar an einer Wandfläche 3 anliegt. Im gezeigten Ausführungsbeispiel besteht die Wandfläche 3 aus einer tragenden Wandung 7, welche beispielsweise aus Metall oder GFK gefertigt sein kann sowie einer Klebeschicht 8 und einer Kunststoffschicht 9, die zur inneren Auskleidung des Behälters zusätzlich vorgesehen ist. Die hierbei verwendeten Kunststoffmaterialien der Kunststoffschicht 9 sind kompatibel zu den verwendeten Kunststoffmaterialien des Abstandshalters 1, sodass eine direkte Verschweißung erfolgen kann oder wie im gezeigten Ausführungsbeispiel mit Hilfe einer absorbierenden Beschichtung 10 mit Hilfe von elektromagnetischer Strahlung 11 eine Verbindung erfolgen kann. Der U-förmig geformte Abstandshalter 1 besitzt rechtwinklige auslaufenden Schenkelenden 12, 13 die abgeschrägt sind und zur Anlage des Auskleidungsmaterials 2 vorgesehen sind, wobei die Anlage des Auskleidungsmaterials 2 an eine zweite Kontaktfläche 14 erfolgt. Alternativ könnte das Auskleidungsmaterial 2, welches in diesem Fall transparent ausgeführt ist, unmittelbar auf die Stirnfläche 15 des Abstandshalters 1 aufgelegt und ebenfalls mit diesem verschweißt werden.

Im gezeigten Ausführungsbeispiel besitzt das Auskleidungsmaterial 2 einen Durchbruch 17 durch welchen hindurch der Abstandshalter 1 geführt ist. Das Auskleidungsmaterial 2 liegt unmittelbar an einer absorbierenden Beschichtung 16 an, welche unterhalb der zweiten Kontaktfläche 14 des Abstandshalters 1 ausgebildet ist. Durch die Verwendung von lichttransparenten Kunststoffmaterialien für den Abstandshalter 1 und das Auskleidungsmaterial 2 kann somit eine Verschweißung erfolgen. Alternativ besteht jedoch ohne weiteres die Möglichkeit bei dieser gezeigten Ausführung das Auskleidungsmaterial ebenfalls aus einem absorbierenden Kunststoff zu fertigen, da durch den Abstandshalter hindurch auch der weitere Schweißpunkt mit der Wandfläche 3 ausgeführt werden kann.

In einer alternativen Lösung könnte das Auskleidungsmaterial 2 in lichttransparenter Ausführung verwendet werden, das oberhalb der beiden auslaufenden Schenkel 12, 13 aufgelegt wird, sodass ebenfalls eine Verschweißung mit der Wandfläche 3 und dem Abstandshalter 1 erfolgen kann, und zwar unter Verwendung einer absorbierenden Zwischenschicht, sodass zusätzlich der besondere Vorteil entsteht, dass die Innenseite des auszukleidenden Behälters vollflächig mit einem Auskleidungsmaterial 2 beschichtet ist.

Zwischen dem Auskleidungsmaterial 2 und der Kunststoffschicht 9 befindet sich ein Zwischenraum 18, der im Falle von Temperaturschwankungen eine Verformung des Auskleidungsmaterials 2 sowohl bei Überdruck als auch bei Unterdruck gewährleistet und zusätzlich im Bedarfsfall als Leckageraum verwendet werden kann, sodass durch das Auskleidungsmaterial hindurchtretende Gase in den Zwischenraum 18 gelangen und über empfindliche Sensoren feststellbar sind und abgesaugt werden können, um eine Beschädigung der Wandfläche zu vermeiden. Darüber hinaus kann der Zwischenraum 18 durch Gase oder Flüssigkeiten gespült werden, um somit eine Beschädigung der Wandfläche 3, insbesondere der tragenden Wandung 7 auszuschließen.

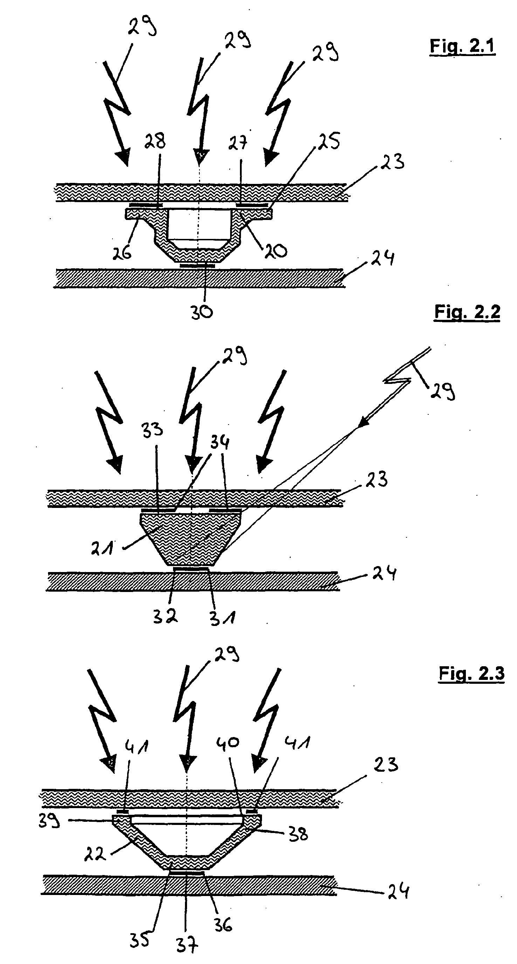

Figur 2 zeigt in drei geschnittenen Seitenansichten verschiedene Ausführungsformen von Abstandshaltern 20, 21, 22, welche jeweils zwischen einem Auskleidungsmaterial 23 und einer Wandfläche 24 angeordnet sind. Die Wandfläche 24 ist hierbei jeweils nur als tragende Kunststoffschicht dargestellt, wobei selbstverständlich eine Anordnung gemäß der Figur 1 verwendet werden kann.

In der oberen geschnittenen Seitenansicht ist ein topfförmiger Abstandshalter 20 vorgesehen, welcher auslaufende Schenkel 25, 26 besitzt, auf denen eine absorbierende Beschichtung 27, 28 als Zwischenlage vorhanden ist, um eine Verschweißung mit Hilfe von elektromagnetischer Strahlung 29 zu ermöglichen. Die auslaufenden Schenkelenden 25, 26 bilden hierbei die zweite Kontaktfläche des Abstandshalters 20, während die erste Kontaktfläche des Abstandshalters durch die breite Basis 30 gebildet wird.

Die zweite Ausführungsvariante des Abstandshalters 21 besteht aus einer aus Vollmaterial bestehenden Trapezform, welche aus einem lichttransparenten Material hergestellt wird und im unteren Bereich eine erste Kontaktfläche 31 mit einer absorbierenden Beschichtung 32 und im oberen Bereich eine zweite Kontaktfläche 33 mit jeweils einer absorbierenden Beschichtung 34 aufweist. Der Abstandshalter 21 liegt mit der ersten Kontaktfläche 31 unmittelbar auf der Wandfläche 24 auf, beziehungsweise an, während das Auskleidungsmaterial 23 auf der zweiten Kontaktfläche 33 aufliegt. Die absorbierende Beschichtung 34 ist hierbei nur streifenweise vorhanden, damit eine Verschweißung der unteren Kontaktfläche 31 ermöglicht wird.

In der unteren geschnittenen Seitenansicht ist ein annähernd V-förmiger Abstandshalter 22 dargestellt, welcher mit einer breiten Basis 35 als erste Kontaktfläche 36 und absorbierender Beschichtung 37 an der Wandfläche 24 anliegt, während das Auskleidungsmaterial 23 stirnseitig auf den Schenkelenden 38, 39 des Abstandshalters 22 anliegt, wobei zwischen dem Auskleidungsmaterial und der zweiten Kontaktfläche 40 wiederum eine absorbierenden Beschichtung 41 vorgesehen ist. Die absorbierenden Beschichtungen 37, 41 dienen ebenso wie bei den zuvor beschriebenen Ausführungsbeispielen der Absorbtion einer elektromagnetischen Strahlung 29 und damit zur Plastifizierung des Auskleidungsmaterials 23, des Abstandshalters 22 sowie der Wandfläche 24, um eine geschweißte Verbindung zwischen dem Auskleidungsmaterial 23 und der Wandfläche 24 über den Abstandshalter 22 herzustellen. Vorgenannte Abstandshalter 20, 21, 22 können in runder oder streifenförmiger Form zum Einsatz kommen.

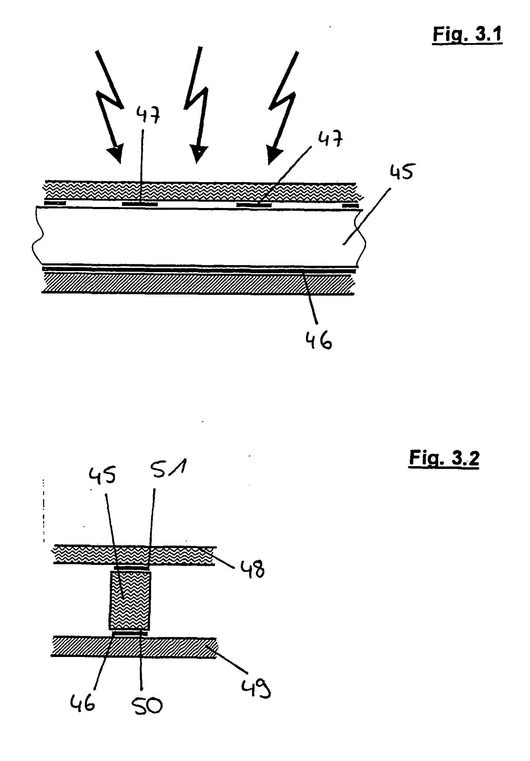

Figur 3 zeigt eine weitere Ausführungsform eines Abstandshalters 45, welcher in diesem Fall aus einem rechteckförmigen Streifen besteht, der auf einer Seite eine durchgehende absorbierende Beschichtung 46 aufweist, während auf der oberen Seite partielle Beschichtungen 47 vorgesehen sind. Die partiellen Beschichtungen 47 können entweder durch Koextrusion auf den Abstandshalter 45 aufgetragen werden oder können durch mechanische Nachbearbeitung einer zuvor aufgetragenen durchgehenden Beschichtung hergestellt werden. Derartige Ausführungen von Abstandshaltern bieten sich dort an, wo größere Lasten abgefangen werden müssen und eine Kontaktierung des Auskleidungsmaterials 48 mit der tragenden Wandfläche 49 über eine große Kontaktfläche erforderlich ist. Der Abstandshalter 45 liegt hierbei mit einer ersten Kontaktfläche 50 unmittelbar an der Wandfläche 49 unter Zwischenschaltung einer absorbierenden Schicht 46 an, während eine zweite Kontaktfläche 51 zur Anlage des Auskleidungsmaterials 48 vorgesehen ist. Die Befestigung des Auskleidungsmaterials 48 unter Verwendung des Abstandshalters 45 kann hierbei in einem oder in zwei Arbeitsgängen durchgeführt werden. Soweit die partielle Beschichtung 47 vorhanden ist, kann beispielsweise das Auskleidungsmaterial über den Abstandshalter 45 unmittelbar mit der Wandfläche 49 verschweißt werden, sodass nur ein Arbeitsgang erforderlich ist. Alternativ besteht die Möglichkeit zunächst den Abstandshalter 45 mit Hilfe von elektromagnetischer Strahlung mit der Wandfläche 49 zu verschweißen und in einem zweiten Arbeitsgang das Auskleidungsmaterial 48 ebenfalls mit elektromagnetischer Strahlung mit dem Abstandshalter 45 zu verschweißen. Je nach vorgesehenem Anwendungsfall und Aufbau des Behälters können somit beide alternativen Möglichkeiten angewendet werden.

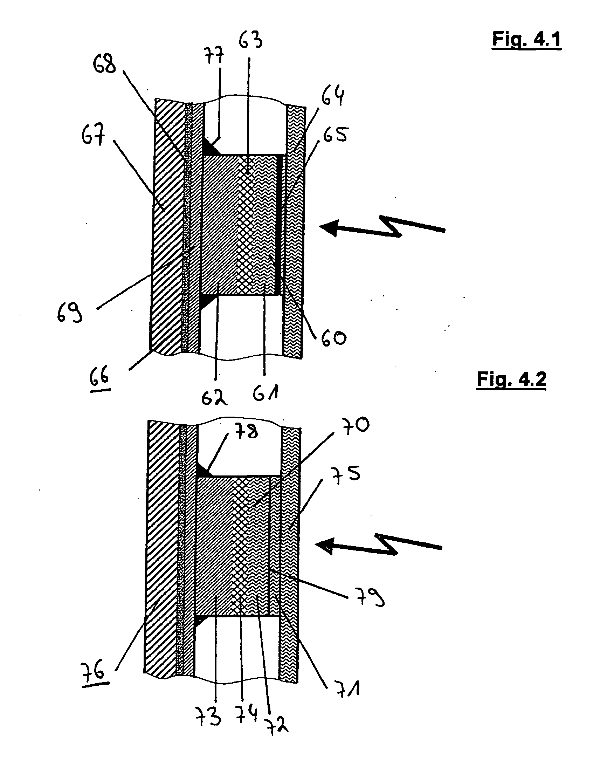

Figur 4 zeigt zwei weitere Ausführungsvarianten eines Abstandshalters 60, 70, welche in der oberen Darstellung aus zwei Abstandsteilen 61, 62 besteht und über eine Koppelschicht 63 miteinander verbunden sind. Der übrige Aufbau entspricht weitestgehend den vorhergehenden Ausführungsvarianten, wobei ein Auskleidungsmaterial 64 an dem Abstandshalter 60 unter Zwischenschaltung einer absorbierenden Beschichtung 65 anliegt, welche zum Verschweißen des Auskleidungsmaterials 64 mit dem ersten Teil 61 des Abstandshalters 60 vorgesehen ist. Die gezeigte Wandfläche 66 besteht aus einer tragenden Wandung 67, welche beispielsweise aus Metall oder GFK hergestellt werden kann sowie einer Klebeschicht 68 und einer inneren Kunststoffschicht 69 die zur weiteren Verbindung mit dem Abstandsteil 62 des Abstandshalters 60 vorgesehen ist. Der Vorteil dieses Abstandshalters 60 besteht darin, dass unterschiedliche Kunststoffmaterialien für das Auskleidungsmaterial 64 und die innere Kunststoffschicht 69 verwendet werden können, welche im Normalfall nicht miteinander beziehungsweise über einen einteiligen Abstandshalter verbindbar sind. Aus diesem Grunde wird eine zweiteilige Ausführungsform des Abstandshalters 60 gewählt, wobei das erste Abstandsteil 61 hinsichtlich des verwendeten Kunststoffmaterials kompatibel mit dem Auskleidungsmaterial 64 ist und mit Hilfe der absorbierenden Beschichtung 65 verschweißt werden kann, während das zweite Abstandsteil 62 aus einem Kunststoff besteht, der wiederum mit dem Material der inneren Kunststoffschicht 69 kompatibel ist. Das gezeigte Ausführungsbeispiel zeigt zur Befestigung des Abstandsteils 62 mit der inneren Kunststoffschicht 69 eine Schweißnaht 77. Dadurch, dass das zweite Abstandsteil 62 kompatibel zu der Kunststoffschicht 69 ausgeführt ist, kann somit beispielsweise durch Warmgasziehschweißen eine Verbindung hergestellt werden. Zur Verbindung des Abstandsteils 62 mit der Kunststoffbeschichtung 69 besteht beispielsweise die Möglichkeit durch Verwendung einer Absorptionsschicht eine Verschweißung hervorzurufen, wozu das Auskleidungsmaterial 64 und der Abstandshalter 60 aus lichttransparenten Materialien besteht. Alternativ besteht die Möglichkeit die Verbindung des Abstandsteils 62 mit der Kunststoffschicht 69 durch die Verwendung einer Absorptionsschicht mittels einer Verschweißung vorzunehmen, wozu das Auskleidungsmaterial 64 und der Abstandshalter 60 aus lichttransparenten Materialien besteht. Ferner besteht die Möglichkeit mit Hilfe einer Reibschweißung eine Verbindung zwischen dem Abstandsteil 62 und der Kunststoffschicht 69 vorzunehmen. Bei dieser Lösung kommt es im Wesentlichen auf die Kopplungsschicht 63 an, welche zur Verbindung der beiden Abstandsteile 61 und 62 benötigt wird, um unterschiedlichste Kunststoffmaterialien miteinander zu verbinden.

Soweit die Wandfläche aus Kunststoff besteht, können Adapterteile aus Kunststoff ferner durch Anspiegeln mit der Wandfläche verbunden werden. Hierzu wird mit Hilfe einer heizbaren Scheibe, eines Balkens oder eines Messers eine Erwärmung der Wandfläche und des Adapterteils vorgenommen und nach Erreichen der notwendigen Temperatur das Hilfsmittel zum Erwärmen entfernt und unter gleichzeitigem Andrücken des Adapterteils eine Schweißverbindung hergestellt. Dieser Arbeitsvorgang kann gegebenenfalls vollautomatisch mit einer Vorrichtung erfolgen.

Die untere geschnittene Seitenansicht der Figur 4 zeigt einen ähnlichen Aufbau eines Abstandshalters 70, der jedoch im vorliegenden Fall auf der innen liegenden Seite aus den beiden Abstandsteilen 71, 72 besteht und auf der außen liegenden Seite aus einem weiteren Abstandsteil 73, wobei die beiden Abstandsteile 72 und 73 über eine Kopplungsschicht 74 miteinander verbunden sind. Die Verbindung des Abstandshalters 70 mit dem Auskleidungsmaterial 75 beziehungsweise der Wandfläche 76, kann in der vorbeschriebenen Art und Weise erfolgen, wobei durch die zweiteilige Ausführungsvariante des Abstandshalters 70 mit den Abstandsteilen 71, 72 auf der dem Auskleidungsmaterial 75 zugewandten Seite der besondere Vorteil erzielt, dass verschiedene Kunststoffmaterialien zum Einsatz kommen, die einerseits kompatibel zum Auskleidungsmaterial 75 und andererseits kompatibel zur Kopplungsschicht 74 sein können. Die beiden Abstandsteile 71 und 72 können hierbei durch eine Klebeschicht miteinander verbunden sein, während das erste Abstandsteil 73 hingegen durch eine Schweißnaht 78 mit der Wandfläche 76 verschweißt wird.

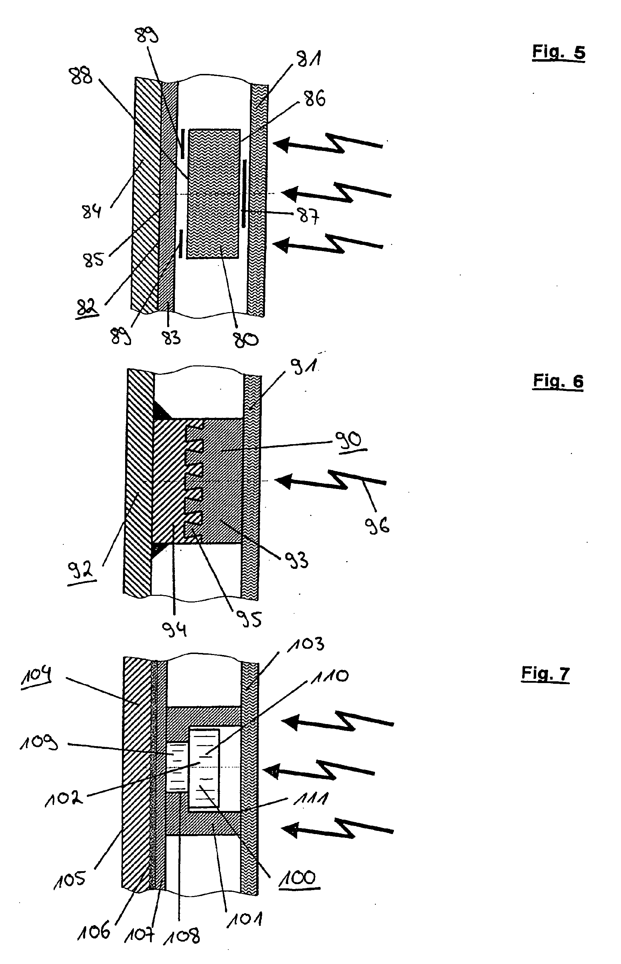

Figur 5 zeigt eine weitere Ausführungsvariante eines Abstandshalter 80 zwischen einem Auskleidungsmaterial 81 und einer Wandfläche 82, welche einen Aufbau zeigt der bereits aus den vorgenannten Figuren bekannt ist und aus einer inneren Kunststoffschicht 83, aus einer äußeren tragenden Wandung 84 und einer Klebeschicht 85 besteht. Zwischen der Wandfläche 82 und dem Auskleidungsmaterial 81 ist ein rechtecksförmiger, vorzugsweise runder oder gegebenenfalls streifenförmiger Abstandshalter 80 angeordnet, welcher ebenso wie das Auskleidungsmaterial 81 transparent ausgeführt ist und auf der zum Auskleidungsmaterial 81 zugewandten zweiten Kontaktfläche 86 eine absorbierende Beschichtung 87 aufweist, während die erste Kontaktfläche 88 mit zwei partiell absorbierenden Beschichtungen 89 ausgestattet ist. Die zweite Kontaktfläche 88 weist ebenfalls eine Beschichtung 89 auf. Durch die lichttransparente Ausführung des Abstandshalters 80 besteht somit die Möglichkeit mit Hilfe von elektromagnetischer Strahlung in einem Schweißvorgang sowohl die innere als auch die äußere Schweißverbindung herzustellen, wobei der besondere Vorteil bei dieser Lösung darin besteht, dass das Auskleidungsmaterial 81 vollflächig über die Abstandshalter geführt ist und somit die im Behälter vorhandenen Gase oder Flüssigkeiten keinen unmittelbaren Kontakt mit dem Abstandshalter 80 aufweisen.

Figur 6 zeigt den aus den vorgenannten Figuren bekannten Aufbau eines Abstandshalters 90 zwischen einem Auskleidungsmaterial 91 und einer Wandfläche 92, wobei der Abstandshalter 90 aus einem Abstandsteil 93 und aus einem Abstandsteil 94 besteht, welche im gezeigten Ausführungsbeispiel über eine Kopplungsschicht 95 verbunden sind, die aus einer Schwalbenschwanzform besteht, sodass durch Verpressen der beiden Abstandsteile 93, 94 eine dauerhafte Verbindung des Abstandshalters 90 hergestellt werden kann. Die Verbindung zwischen dem Abstandsteil 93 mit dem Auskleidungsmaterial 91 kann durch elektromagnetische Strahlung 96 erfolgen, wobei bei der Verwendung von transparenten Materialien eine Verschweißung sowohl zwischen dem Auskleidungsmaterial 91 und dem Abstandsteil 93 als auch zwischen dem Abstandsteil 94 und der Wandfläche 92 erfolgt. Die vorliegende Kopplungsschicht 95 mit einer schwalbenschwanzförmigen Verbindung kann in diesem Falle nicht nur durch Verpressen, sondern durch ineinander schieben der schwalbenschwanzförmigen Verbindung hergestellt werden. Zur Vermeidung eines Auseinanderrutschens kann hierbei zusätzlich ein loser Ring, welcher nicht dargestellt ist, um den Abstandshalter 90 angeordnet sein, sodass ohne Verpressen ebenfalls eine dauerhafte Verbindung der Kopplungsschicht 95 gewährleistet ist. Alternativ kann die schwalbenschwanzförmige Verbindung zusätzlich gebogen oder geschwungen sein, sodass ein nachträgliches Verrutschen ausgeschlossen werden kann.

Figur 7 zeigt in einer geschnittenen Seitenansicht einen Abstandshalter 100, der aus zwei Abstandsteilen 101 und 102 besteht, welche beide durch Formschluss miteinander verbunden sind. Ebenso wie in den vorhergehenden Fällen ist der Abstandshalter 100 zwischen einem Auskleidungsmaterial 103 und einer Wandfläche 104 angeordnet, wobei die Wandfläche 104 wiederum aus einer tragenden Wandung 105, einer Klebeschicht 106 und einer inneren Kunststoffschicht 107 besteht. Das erste Abstandsteil 101 besteht, sofern eine runde Ausführung vorliegt, aus einem topfförmigen Element, welches eine Bohrung 108 aufweist oder, falls es sich um eine längere streifenförmige Ausführung handelt, um ein U-Profil, welches ebenfalls einen Durchbruch aufweist. Durch die Bohrung hindurch ist das zweite Abstandsteil 102, bestehend aus einem runden oder streifenförmigen Teil mit einem verjüngten Ende 109 und einem kopfseitigen vergrößerten Ende 110 geführt, wobei das verjüngten Ende 109 in die Bohrung 108 eingesetzt ist, sodass ein Formschluss vorhanden ist. Eine Verschweißung des zweiten Abstandsteils 102 erfolgt über die Stirnseite mit der Kunststoffbeschichtung 107, während das erste Abstandsteil 101 nur mit den Stirnflächen 111 in Kontakt mit dem Auskleidungsmaterial 103 steht und mit diesem verschweißt wird. Auch bei dieser Lösung können somit unterschiedliche Kunststoffmaterialien eingesetzt werden, da eine Kopplung lediglich über den Formschluss der unterschiedlichen Abstandsteile 102 und 101 erfolgt.

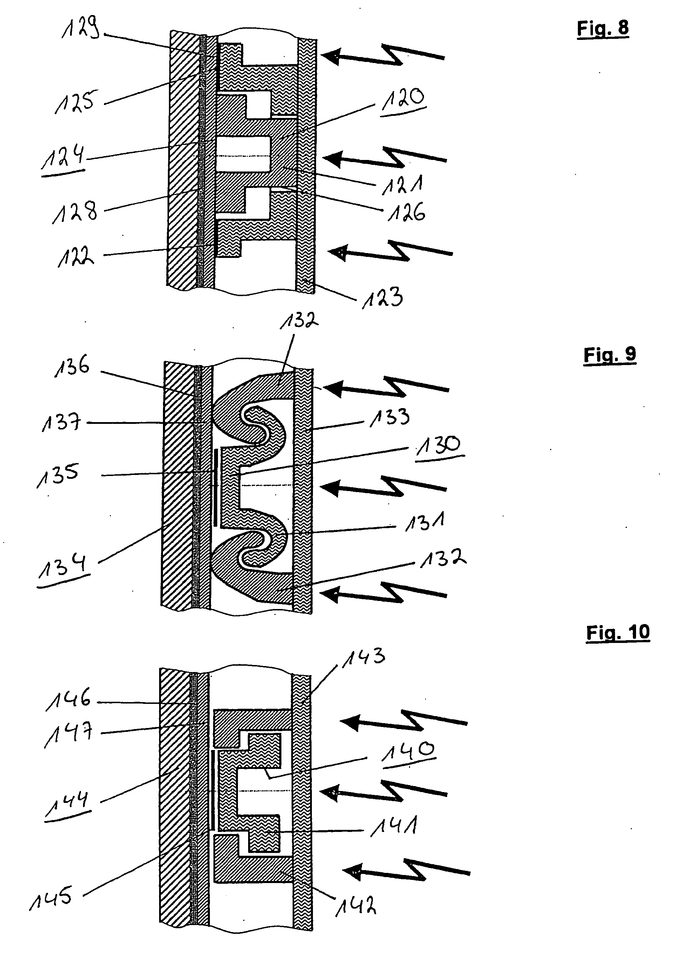

Weitere denkbare Formen für einen Formschluss sind aus den Figuren 8, 9 und 10 ersichtlich. In der oberen geschnittenen Seitenansicht sind zwei U-förmige Abstandsteile 121, 122 eines Abstandshalters 120 wechselweise mit dem Auskleidungsmaterial 123 beziehungsweise mit der Wandfläche 124 verbunden, wobei ein erstes Abstandsteil 122 über eine absorbierende Beschichtung 125 mit der Wandfläche 124 verbunden ist, während das zweite Abstandsteil 121 absorbierend ausgebildet sein kann und demzufolge eine unmittelbare Verschweißung mit dem Auskleidungsmaterial 123 erfolgen kann. Das erste und zweite Abstandsteil 121, 122 kann tellerförmig oder streifenförmig ausgestaltet sein. In Figur 9 ist ein Abstandshalter 130 mit gebogenen Abstandsteilen 131 und 132 dargestellt, während in der Figur 10 in einer geschnittenen Ansicht ein Abstandshalter 140 mit einem U-förmigen ersten Abstandsteil 141 und einem zweiten topfförmigen Abstandsteil 142 verwendet wird, wobei die gezeigten Ausführungsvarianten jeweils einen Formschluss zwischen den Abstandsteilen 131, 132 beziehungsweise 141, 142 herstellen, sodass die verwendeten Kunststoffmaterialien für das Auskleidungsmaterial 133, 143 beziehungsweise für die Wandfläche 134, 144 unterschiedlich ausgebildet sein können.

In Figur 9 ist das erste Abstandsteil 131 über eine absorbierende Beschichtung 135 mit der Wandfläche 134 verschweißt, während das zweite Abstandsteil 132 selbst absorbierend ausgebildet ist und somit unmittelbar mit dem Auskleidungsmaterial 133 verschweißbar ist. Alternativ kann eine absorbierende Beschichtung vorgesehen sein.

In Figur 10 ist das erste Abstandsteil 141 über eine absorbierende Beschichtung 145 mit der Wandfläche 144 verschweißt, während das zweite Abstandsteil 142 selbst absorbierend ausgebildet ist oder über eine absorbierende Beschichtung mit der Wandfläche 144 verschweißt werden kann.

Die Wandfläche 124, 134, 144 kann in den gezeigten Ausführungsbeispielen aus Stahl, GFK oder Beton bestehen. Alternativ kann die Wandfläche 124, 134, 144 zusammen mit der Kopplungsschicht 128, 136, 146 massiv, beispielsweise aus PE, ausgebildet sein, während die Kopplungsschicht 128, 136, 146 aus einer Klebeschicht, aus einer Haftschicht oder aus Noppen bestehen kann. Eine Inlinerbeschichtung 129, 137, 147 bildet bei den Ausführungen gemäß Figur 8 bis 10 eine erste Schutzschicht, welche durch das Auskleidungsmaterial 123, 133, 143 als zweite Inlinerbeschichtung geschützt wird.

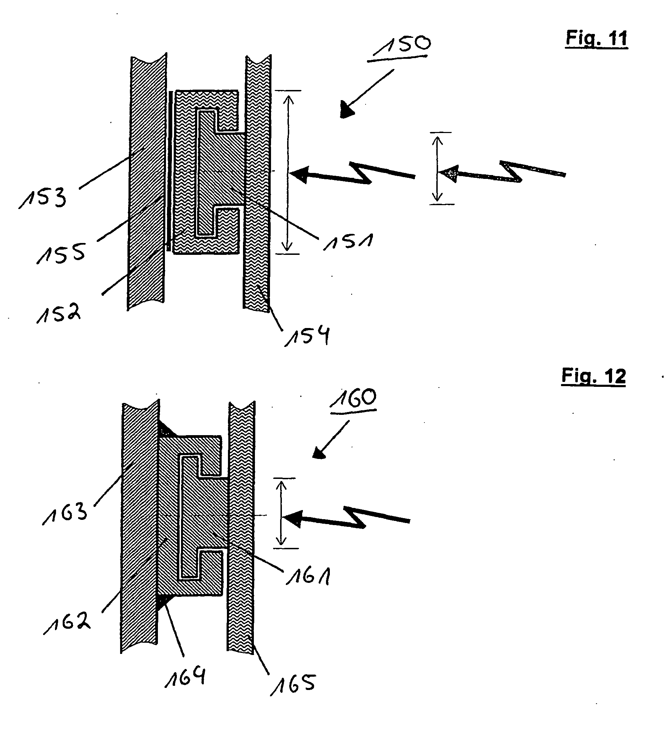

Figur 11 zeigt in einer geschnittenen Seitenansicht eine zweiteilige Ausführungsvariante eines Abstandshalters 150, bestehend aus zwei streifenförmigen Abstandsteilen 151, 152. Die beiden Abstandsteile 151, 152 sind wie die zuvor genannten Ausführungsbeispiele durch Formschluss miteinander verbunden, wobei das zweite Abstandsteil 152 eine absorbierende Beschichtung 155 aufweist, sodass mit Hilfe von elektromagnetischer Strahlung eine Verschweißung mit der Wandfläche 153 stattfinden kann, während das erste Abstandsteil 151 unmittelbar mit dem Auskleidungsmaterial 154 verschweißbar ist und beide Abstandsteile 151, 152 durch Formschluss miteinander verbunden sind, beispielsweise kann das Abstandsteil 151 in das Abstandsteil 152 eingeschoben werden.

Figur 12 zeigt eine weitere alternative Ausführungsform eines Abstandshalters 160, welcher ebenfalls aus zwei streifenförmigen Abstandsteilen 161 und 162 besteht, die durch Formschluss miteinander verbunden sind. Die Befestigung des zweiten Abstandsteils 162 an der Wandfläche 163 erfolgt durch eine Verschweißung, beispielsweise Warmgasziehschweißen mit Hilfe einer Schweißnaht 164. Das erste Abstandsteil 161 ist demgegenüber mit dem Auskleidungsmaterial 165 verschweißt, wobei bei dieser Lösung eine Verschweißung mit Hilfe von elektromagnetischer Strahlung zwischen dem Auskleidungsmaterial 165 und dem ersten Abstandsteil 161 erfolgen kann. Das Abstandsteil 161 kann bei dieser Ausführungsform insofern ebenfalls absorbierend ausgebildet sein. Das zweite Abstandsteil 162 hingegen braucht nicht aus einem artverwandten Material zu bestehen, sodass die Möglichkeit des Einsatzes eines Metallteils besteht, um beispielsweise neben dem Warmgasziehschweißen nicht nur eine Verbindung zwischen den Kunststoffteilen herzustellen, sondern mit herkömmlichen Schweißmethoden auch eine Verbindung mit einer aus Metall bestehenden Wandfläche 163 zu ermöglichen. Aufgrund des vorliegenden Formschlusses der beiden Abstandsteile 161, 162, kann somit das Auskleidungsmaterial 165 problemlos befestigt werden.

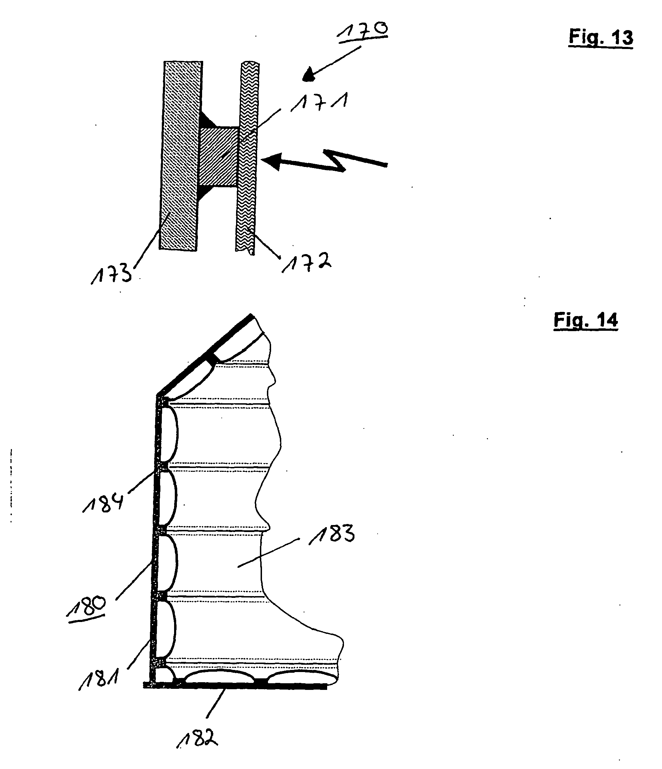

Figur 13 zeigt eine alternative Haltevorrichtung 170, welche mit Hilfe eines streifenförmigen Abstandshalters 171, der aus einem Cap-Strip besteht, die Verbindung eines Auskleidungsmaterials 172 mit einer Wandfläche 173 ermöglicht. Der Abstandshalter 171 ist bei dieser Ausführungsvariante absorbierend ausgebildet. Bei dieser Lösung wird eine streifenförmige Befestigung des Auskleidungsmaterials bevorzugt, um eine großflächige Lastverteilung des Auskleidungsmaterials 172 auf der Wandfläche 173 zu erzielen. Diese Lösung bietet sich an, wenn mit großen Temperaturenunterschieden der in dem Behälter befindlichen Medien zu rechnen ist und somit das Auskleidungsmaterial erheblichen thermischen Beanspruchungen ausgesetzt ist oder ein Über- oder Unterdruck entstehen kann.

Figur 14 zeigt in einer Teilansicht einen Behälter 180 mit einer Wandfläche 181 und einer Bodenfläche 182 sowie einem Auskleidungsmaterial 183, welches mit Hilfe des Abstandshalters 184 an der Wandfläche 181 und Bodenfläche 182 befestigt wird. Bei dieser Lösung können die Abstandshalter aus den Figuren 11, 12 oder 13 eingesetzt werden, welche in Streifenform vorliegen und somit eine streifenförmige Befestigung des Auskleidungsmaterials 183 an der Wandfläche 181 und Bodenfläche 182 ermöglichen, wobei das Auskleidungsmaterial 183 aufgrund des Eigengewichtes und der vorliegenden linienförmigen Befestigungsart zur Kissenbildung neigt. Diese Kissenbildung ist bei dieser Lösung erwünscht, da die aufzunehmenden Medien gegebenenfalls sehr starken Temperaturschwankungen unterliegen und mit einem Über- oder Unterdruck gearbeitet wird, sodass die Notwenigkeit besteht, dass das Auskleidungsmaterial 183 sich den veränderten Bedingungen anpassen kann und eine ausreichende Elastizität zugrunde liegt. Durch diese Befestigungsart kann eine Anbringung des Auskleidungsmaterials 183 unmittelbar bis zum Eckbereich erfolgen.

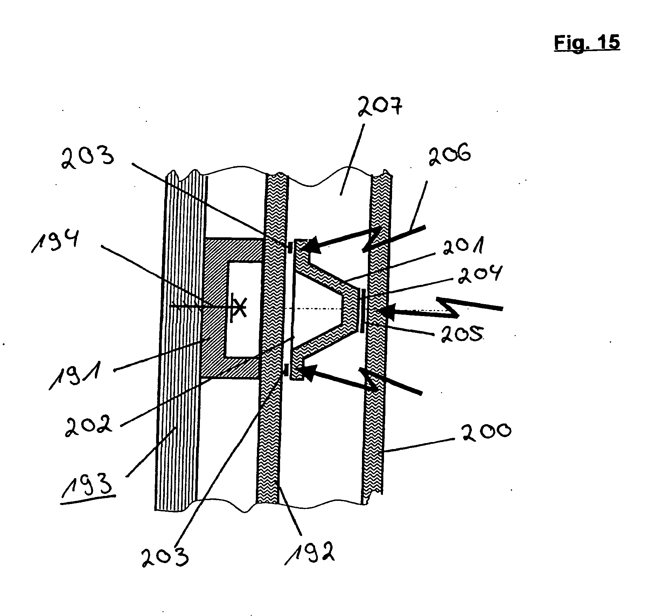

Figur 15 zeigt in einer geschnittenen Seitenansicht die Möglichkeit zur Befestigung eines weiteren Auskleidungsmaterials 200 auf einem Auskleidungsmaterial 192 mit einem Abstandshalter 191 und einer Wandfläche 193. Der Abstandshalter 191 ist über einen Schraubbolzen 194 mit der Wandfläche 193 verbunden. Mit Hilfe eines weiteren Abstandhalters 201, welcher im Wesentlichen V-förmig ausgebildet ist und auf einer ersten Kontaktfläche 202 eine absorbierende Beschichtung 203 sowie auf einer zweiten Kontaktfläche 204 eine absorbierende Beschichtung 205 aufweist, erfolgt die Befestigung des weiteren Auskleidungsmaterials 200. Die Kontaktfläche 202 liegt unmittelbar an dem ersten Auskleidungsmaterial 192 an, während die Kontaktfläche 204 zur Anlage an das zweite Auskleidungsmaterial 200 vorgesehen ist. Mit Hilfe von elektromagnetischer Strahlung 206 erfolgt eine Verschweißung des Abstandhalters 201, sowohl mit dem ersten Auskleidungsmaterial 192, als auch mit dem zweiten Auskleidungsmaterial 200. Für den zweiten Abstandhalter 201 wird hierbei ein rundes Element verwendet, es ist jedoch ohne weiteres denkbar, dass auch hier längliche Streifen mit einem V-förmigen Querschnitt zum Einsatz kommen. Zwischen den beiden Auskleidungsmaterialien 192 und 200 liegt ein Zwischenraum 207, welcher eine Ausdehnung der Auskleidungsmaterialien 192 und 200 in Folge unterschiedlicher Temperatureinwirkung ermöglicht und darüber hinaus die Funktion eine Leckageraumes erfüllt, um austretende Gase oder Flüssigkeiten aufzunehmen und aus diesem Zwischenraum 207 gegebenenfalls abzusaugen oder mit Hilfe eines Gases oder einer Flüssigkeit ausspülen zu können.

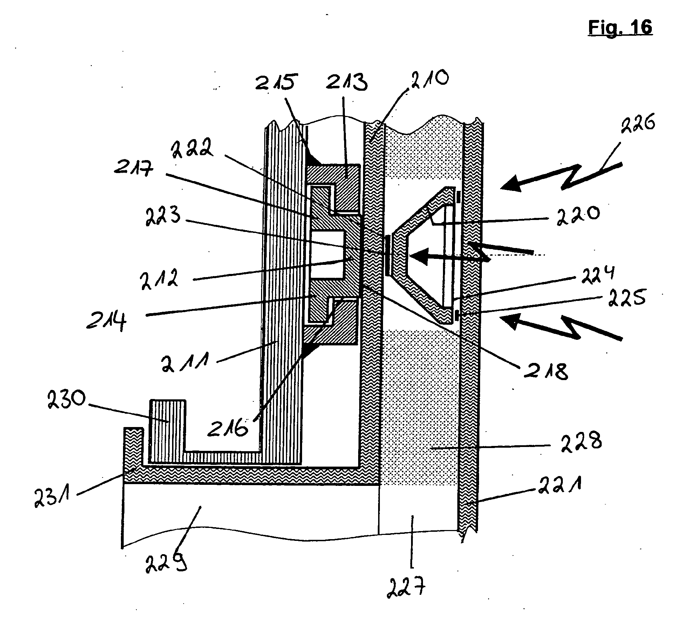

Figur 16 zeigt in einer geschnittenen Seitenansicht wie zwei Auskleidungsmaterialien 210 und 221 zum Einsatz kommen. Das erste Auskleidungsmaterial 210 wird über einen Abstandshalter 212 mit der Wandfläche 211 verbunden, während über einen zweiten Abstandshalter 220 eine Verbindung eines weiteren Auskleidungsmaterials 221 erfolgt. Der Abstandshalter 220 weist einen V-förmigen Querschnitt auf und ist im vorliegenden Ausführungsbeispiel rund gestaltet. Eine erste Kontaktfläche 222 weist eine absorbierende Beschichtung 223 auf, während eine zweite Kontaktfläche 224 eine absorbierende Beschichtung 225 aufweist. Die erste absorbierende Beschichtung 223 dient zum Verschweißen des Abstandshalters 220 mit dem ersten Auskleidungsmaterial 210, während die zweite absorbierende Beschichtung 225 zur Verschweißung mit dem zweiten Auskleidungsmaterial 221 vorgesehen ist. Beide Schweißverbindungen können mit Hilfe von elektromagnetischer Strahlung 226 in einem Arbeitsgang hergestellt werden. Zwischen dem Auskleidungsmaterial 210 und 221 befindet sich ein Zwischenraum 227, welcher mit einem Abstandsgewebe 228 ausgefüllt ist. Das Abstandsgewebe dient im Wesentlichen dem Zweck, dass die beiden Auskleidungsmaterialien 210 beziehungsweise 221 nicht miteinander in Berührung kommen und somit der Zwischenraum 227 über den gesamten äußeren Umfang erhalten bleibt. Der Zwischenraum 227 dient zur Aufnahme austretender Gase oder Flüssigkeiten, die durch einen Spülvorgang entfernt werden können. Aus diesem Grunde ist in der Figur 16 im unteren Bereich ein Anschluss 229 dargestellt, an den beispielsweise eine Pumpe angeschlossen werden kann. Von diesem Anschluss 229 ist nur der obere Abschnitt zeichnerisch dargestellt, und zwar mit einem kragenförmigen Übergang 230 der Wandfläche 211 und einem kragenförmigen Übergang 231 des Auskleidungsmaterials 210. Die beiden Auskleidungsmaterialien 210 und 221 werden hierbei als Inlinerfolien eingesetzt, und zwar zum Schutz der Wandfläche 211, wobei durch den Zwischenraum 227 die Möglichkeit einer vorzeitigen Erkennung einer Undichtigkeit erfolgen kann und darüber hinaus durch eine Spülung Gase oder Flüssigkeiten aus diesem Zwischenraum 227 entfernbar sind.

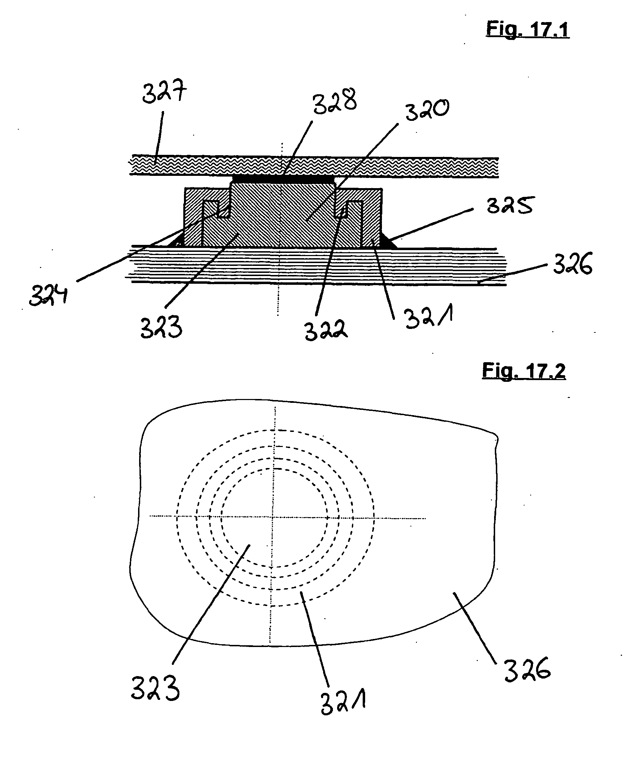

Figur 17 zeigt in einer geschnittenen Seitenansicht und einer Draufsicht eine zweiteilige Ausführungsform eines Abstandshalters 320, wie er bereits aus den vorhergehenden Figuren bekannt ist. Der Abstandshalter 320 besteht aus einem ersten Abstandsteil 321, welches ringförmig ausgebildet mit einem übergreifenden Kragen 322 ausgestattet ist, während ein zweites Abstandsteil 323 ringförmig mit einer Nut 324 ausgebildet ist, in die der Kragen 322 des ersten Abstandsteils 321 eingreift. Das erste Abstandsteil 321 wird mit Hilfe einer Schweißnaht 325 mit der Wandfläche 326 verschweißt, nach dem das zweite Abstandsteil 323 eingesetzt worden ist. Das Auskleidungsmaterial 327 wird mit Hilfe eines Absorbtionsmaterials 328 mit dem zweiten Abstandsteil 323 verschweißt, wobei bei dieser Ausführungsvariante ebenfalls wieder ein Induktionsschweißverfahren angewendet werden kann und das Absorbtionsmaterial 328 entweder mit Nanopartikeln oder mit einem Mahlgut angereichert ist.

### Bezugszeichenliste

| | |
|---|---|
| 1 | Abstandshalter |
| 2 | Auskleidungsmaterial |
| 3 | Wandfläche |
| 4 | Abstandshalter |
| 5 | Basis |
| 6 | Kontaktfläche |
| 7 | Wandung |
| 8 | Klebeschicht |
| 9 | Kunststoffschicht |
| 10 | Beschichtung |
| 11 | Strahlung |
| 12 | Schenkelende |
| 13 | Schenkelende |
| 14 | Kontaktfläche |
| 15 | Stirnfläche |
| 16 | Beschichtung |
| 17 | Durchbruch |
| 18 | Zwischenraum |
| 20 | Abstandshalter |
| 21 | Abstandshalter |
| 22 | Abstandshalter |
| 23 | Auskleidungsmaterial |
| 24 | Wandfläche |
| 25 | Schenkel |
| 26 | Schenkel |
| 27 | Beschichtung |
| 28 | Beschichtung |
| 29 | Strahlung |
| 30 | Basis |
| 31 | Kontaktfläche |
| 32 | Beschichtung |
| 33 | Kontaktfläche |
| 34 | Beschichtung |
| 35 | Basis |
| 36 | Kontaktfläche |
| 37 | Beschichtung |
| 38 | Schenkelende |
| 39 | Schenkelende |
| 40 | Kontaktfläche |
| 41 | Beschichtung |
| 45 | Abstandshalter |
| 46 | Beschichtung |
| 47 | Beschichtung |
| 48 | Auskleidungsmaterial |
| 49 | Wandfläche |
| 50 | Kontaktfläche |
| 51 | Kontaktfläche |
| 60 | Abstandshalter |
| 61 | Abstandsteil |
| 62 | Abstandsteil |
| 63 | Kopplungsschicht |
| 64 | Auskleidungsmaterial |
| 65 | Beschichtung |
| 66 | Wandfläche |
| 67 | Wandung |
| 68 | Klebeschicht |
| 69 | Kunststoffschicht |
| 70 | Abstandshalter |
| 71 | Abstandsteil |
| 72 | Abstandsteil |
| 73 | Abstandsteil |
| 74 | Kopplungsschicht |
| 75 | Auskleidungsmaterial |
| 76 | Wandfläche |
| 77 | Schweißnaht |
| 78 | Schweißnaht |
| 80 | Abstandshalter |
| 81 | Auskleidungsmaterial |
| 82 | Wandfläche |
| 83 | Kunststoffschicht |
| 84 | Wandung |
| 85 | Klebeschicht |
| 86 | Kontaktfläche |
| 87 | Beschichtung |
| 88 | Kontaktfläche |
| 89 | Beschichtung |
| 90 | Abstandshalter |
| 91 | Auskleidungsmaterial |
| 92 | Wandfläche |
| 93 | Abstandsteil |
| 94 | Abstandsteil |
| 95 | Kopplungsschicht |
| 96 | Strahlung |
| 100 | Abstandshalter |
| 101 | Abstandsteil |
| 102 | Abstandsteil |
| 103 | Auskleidungsfolie |
| 104 | Wandfläche |
| 105 | Wandung |
| 106 | Klebeschicht |
| 107 | Kunststoffschicht |
| 108 | Bohrung |
| 109 | Ende |
| 110 | Ende |
| 111 | Stirnfläche |
| 120 | Abstandshalter |
| 121 | Abstandsteil |
| 122 | Abstandsteil |
| 123 | Auskleidungsmaterial |
| 124 | Wandfläche |
| 125 | Beschichtung |
| 128 | Kopplungsschicht |
| 129 | Inlinerbeschichtung |
| 130 | Abstandshalter |
| 131 | Abstandsteil |
| 132 | Abstandsteil |
| 133 | Auskleidungsmaterial |
| 134 | Wandfläche |
| 135 | Beschichtung |
| 136 | Kopplungsschicht |
| 137 | Inlinerbeschichtung |
| 140 | Abstandshalter |
| 141 | Abstandsteil |
| 142 | Abstandsteil |
| 143 | Auskleidungsmaterial |
| 144 | Wandfläche |
| 145 | Beschichtung |
| 146 | Kopplungsschicht |
| 147 | Inlinerbeschichtung |
| 150 | Abstandshalter |
| 151 | Abstandsteil |
| 152 | Abstandsteil |
| 153 | Wandfläche |
| 154 | Auskleidungsmaterial |
| 155 | Beschichtung |
| 160 | Abstandshalter |
| 161 | Abstandsteil |
| 162 | Abstandsteil |
| 163 | Wandfläche |
| 164 | Schweißnaht |
| 165 | Auskleidungsmaterial |
| 170 | Haltevorrichtung |
| 171 | Abstandshalter |
| 172 | Auskleidungsmaterial |
| 173 | Wandfläche |
| 180 | Behälter |
| 181 | Wandfläche |
| 182 | Bodenfläche |
| 183 | Auskleidungsmaterial |
| 184 | Abstandshalter |
| 191 | Abstandshalter |
| 192 | Auskleidungsmaterial |
| 193 | Wandfläche |
| 194 | Schraubbolzen |
| 200 | Auskleidungsmaterial |
| 201 | Abstandshalter |
| 202 | Kontaktfläche |
| 203 | Beschichtung |
| 204 | Kontaktfläche |
| 205 | Beschichtung |
| 206 | Strahlung |
| 207 | Zwischenraum |
| 210 | Auskleidungsmaterial |
| 211 | Wandfläche |
| 218 | Beschichtung |
| 220 | Abstandshalter |
| 221 | Auskleidungsmaterial |
| 222 | Kontaktfläche |
| 223 | Beschichtung |
| 224 | Kontaktfläche |
| 225 | Beschichtung |
| 226 | Strahlung |
| 227 | Zwischenraum |
| 228 | Abstandsgewebe |
| 229 | Anschluss |
| 230 | Übergang |
| 231 | Übergang |
| 320 | Abstandshalter |
| 321 | Abstandsteil |
| 322 | Kragen |
| 323 | Abstandsteil |
| 324 | Nut |
| 325 | Schweißnaht |
| 326 | Wandfläche |
| 327 | Auskleidungsmaterial |
| 328 | Absorptionsmaterial |

## Patentansprüche

1. Haltevorrichtung zur Fixierung eines Auskleidungsmaterials (2, 23, 48, 64, 75, 81, 91, 123, 133, 143, 154, 165, 172, 183, 200, 210, 221, 327) an einer Wandfläche (3, 24, 49, 66, 76, 82, 92, 104, 124, 134, 144, 153, 163, 173, 181, 211, 326), insbesondere einer Behälter-, Apparate- oder Anlagenwand, welches an der Wandfläche (3, 24, 49, 66, 76, 82, 92, 104, 124, 134, 144, 153, 163, 173, 181, 211, 326) mittels Abstandshalter (1, 4, 20, 21, 22, 45, 60, 70, 80, 90, 100, 120, 130, 140, 150, 160, 171, 184, 201, 212, 220, 320) festlegbar ist,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) zumindest teilweise aus Kunststoff bestehen und mit einer ersten Kontaktfläche (6, 14, 31, 33, 36, 40, 50, 51, 86, 88, 202, 204, 222, 224) mit der Wandfläche (3, 24, 49, 66, 76, 82, 92, 104, 124, 134, 144, 153, 163, 173, 181, 211, 326) und mit einer zweiten Kontaktfläche (6, 14, 31, 33, 36, 40, 50, 51, 86, 88, 202, 204, 222, 224) mit dem Auskleidungsmaterial (2, 23, 48, 64, 75, 81, 91, 123, 133, 143, 154, 165, 172, 183, 200, 210, 221, 327) verschweißbar sind.

2. Haltevorrichtung nach Anspruch 1,
**dadurch gekennzeichnet,**
**dass** die erste Kontaktfläche (6, 14, 31, 33, 36, 40, 50, 51, 86, 88, 202, 204, 222, 224) auf einer Stirnfläche der Abstandshalter (1, 4, 20, 21, 22, 45, 60, 70, 80, 90, 100, 120, 130, 140, 150, 160, 171, 184, 201, 212, 220, 320) ausgebildet ist und/oder dass die zweite Kontaktfläche (6, 14, 31, 33, 36, 40, 50, 51, 86, 88, 202, 204, 222, 224) auf einer diametral gegenüberliegenden Stirnfläche oder einer hierzu parallelen Fläche ausgebildet ist.

3. Haltevorrichtung nach Anspruch 1 oder 2,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) rund, oval oder als Streifen ausgebildet sind, welche auf der zum Auskleidungsmaterial (2, 23, 48, 64, 75, 81, 91, 123, 133, 143, 154, 165, 172, 183, 200, 210, 221, 327) ausgerichteten Kontaktfläche (6, 14, 31, 33, 36, 40, 50, 51, 86, 88, 202, 204, 222, 224) zumindest abschnittsweise mit einer absorbierenden Beschichtung (10 ,16, 27, 28, 32, 34, 37, 41, 46, 47, 65, 87, 89, 125, 135, 145, 155, 203, 205, 218, 223, 225, 328) versehen sind.

4. Haltevorrichtung nach einem oder mehreren der Ansprüche 1 bis 3,
**dadurch gekennzeichnet,**
**dass** die zur Wandfläche (3, 24, 49, 66, 76, 82, 92, 104, 124, 134, 144, 153, 163, 173, 181, 211, 326) ausgerichtete Kontaktfläche (6, 14, 31, 33, 36, 40, 50, 51, 86, 88, 202, 204, 222, 224) zumindest abschnittsweise mit einer absorbierenden Beschichtung (10, 16, 27, 28, 32, 34, 37, 41, 46, 47, 65, 87, 89, 125, 135, 145, 155, 203, 205, 218, 223, 225, 328) versehen ist und/oder dass die Abstandshalter (1, 4, 20, 21, 22, 45, 60, 70, 80, 90, 100, 120, 130, 140, 150, 160, 171, 184, 201, 212, 220, 320) im Querschnitt ein U-Profil, ein U-Profil mit auslaufenden Schenkelenden und innen liegenden oder außen liegenden Kontaktflächen (6, 14, 31, 33, 36, 40, 50, 51, 86, 88, 202, 204, 222, 224), ein T-Profil, ein Trapezprofil, ein V-Profil mit breiter Basisfläche und auslaufenden Schenkelenden oder ein Hutprofil bilden, oder aus einem vorzugsweise vollflächigen Rechteckprofil oder quadratischen Profil bestehen.

5. Haltevorrichtung nach Anspruch 4,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) zweiteilig ausgebildet sind, wobei ein erstes Abstandsteil (61, 62, 71, 72, 73, 74, 93, 94, 101, 102, 121, 122, 131, 132, 141, 142, 151, 152, 161, 162, 213, 214, 321, 323) mit der Wandfläche (3, 24, 49, 66, 76, 82, 92, 104, 124, 134, 144, 153, 163, 173, 181, 211, 326) und ein zweites Abstandsteil mit dem Auskleidungsmaterial (2, 23, 48, 64, 75, 81, 91, 123, 133, 143, 154, 165, 172, 183, 200, 210, 221, 327) verbunden ist und beide Abstandsteile (61, 62, 71, 72, 73, 74, 93, 94, 101, 102, 121, 122, 131, 132, 141, 142, 151, 152, 161, 162, 213, 214, 321, 323) durch eine Kopplungsschicht (74, 95, 128, 136, 146) miteinander verbunden sind.

6. Haltevorrichtung nach Anspruch 5,
**dadurch gekennzeichnet,**
**dass** die Kopplungsschicht (63, 74, 95, 128, 136, 146) aus einer Klebe- oder Haftschicht (8, 68, 85, 106) oder aus miteinander form- und/oder kraftschlüssig verbundenen ersten und zweiten Kopplungselementen besteht oder dass die Kopplungsschicht (63, 74, 95, 128, 136, 146) aus einer verpressbaren schwalbenschwanzförmigen Verzahnung besteht, und/oder dass die Abstandshalter (1, 4, 20, 21, 22, 45, 60, 70, 80, 90, 100, 120, 130, 140, 150, 160, 171, 184, 201, 212, 220, 320) zu einer Seite der Kopplungselemente wenigstens eine absorbierende Beschichtung (10, 16, 27, 28, 32, 34, 37, 41, 46, 47, 65, 87, 89, 125, 135, 145, 155, 203, 205, 218, 223, 225, 328) aufweisen, welche durch die elektromagnetische Strahlung verschweißbar ist

7. Haltevorrichtung nach Anspruch 6,
**dadurch gekennzeichnet,**
**dass** die Kopplungselemente T-förmig, pilz-förmig, U-förmig mit auslaufenden Schenkeln, tellerförmig, wellenförmig mit einer geraden Mittelbasis, S-förmig oder winkelförmig ausgebildet sind, wobei runde oder streifenförmige Kopplungselemente verwendbar sind.

8. Haltevorrichtung nach einem oder mehreren der Ansprüche 1 bis 7,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) in Durchbrüchen (17, 216) des Auskleidungsmaterials (2, 23, 48, 64, 75, 81, 91, 123, 133, 143, 154, 165, 172, 183, 200, 210, 221, 327) aufnehmbar sind, und/oder dass die Wandfläche (3, 24, 49, 66, 76, 82, 92, 104, 124, 134, 144, 153, 163, 173, 181, 211, 326) aus einem kaschierten, vorzugsweise dünnen, Kunststoffmaterial besteht, welches auf einer Metall- oder GFK-Außenwand aufgeklebt ist und/oder dass die Abstandshalter (1, 4, 20, 21, 22, 45, 60, 70, 80, 90, 100, 120, 130, 140, 150, 160, 171, 184, 201, 212, 220, 320) mit einer Wandfläche (3, 24, 49, 66, 76, 82, 92, 104, 124, 134, 144, 153, 163, 173, 181, 211, 326) verbunden sind, welche aus einer stabilen tragenden Kunststoffwandung oder Metallwandung besteht.

9. Haltevorrichtung nach einem oder mehreren der Ansprüche 1 bis 8,
**dadurch gekennzeichnet,**
**dass** ein erster Abstandshalter (1, 4, 20, 21, 22, 45, 60, 70, 80, 90, 100, 120, 130, 140, 150, 160, 171, 184, 201, 212, 220, 320) im Falle einer zweiteiligen Ausführungsform mit Formschluss aus Metall und ein zweiter Abstandshalter (1, 4, 20, 21, 22, 45, 60, 70, 80, 90, 100, 120, 130, 140, 150, 160, 171, 184, 201, 212, 220, 320) aus Kunststoff besteht und/oder dass zwischen Auskleidungsmaterial (2, 23, 48, 64, 75, 81, 91, 123, 133, 143, 154, 165, 172, 183, 200, 210, 221, 327) und Wandfläche (3, 24, 49, 66, 76, 82, 92, 104, 124, 134, 144, 153, 163, 173, 181, 211, 326) ein Zwischenraum (18, 207, 227) ausgebildet ist.

10. Haltevorrichtung nach einem oder mehreren der Ansprüche 1 bis 9,
**dadurch gekennzeichnet,**
**dass** in dem Zwischenraum (18, 207, 227) ein Abstandselement, beispielsweise ein Kunststoffgitter, eine Kunststoffgaze oder ein offenporiger Schaumstoff, einliegt.

11. Haltevorrichtung nach einem oder mehreren der Ansprüche 1 bis 10,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) aus einem lichttransparenten Kunststoffmaterial bestehen und/oder dass die Abstandshalter (1, 4, 20, 21, 22, 45, 60, 70, 80, 90, 100, 120, 130, 140, 150, 160, 171, 184, 201, 212, 220, 320) mit Wandflächen (3, 24, 49, 66, 76, 82, 92, 104, 124, 134, 144, 153, 163, 173, 181, 211, 326) aus einem lichtabsorbierenden Kunststoffmaterial verbunden sind und/oder dass die Abstandshalter (1, 4, 20, 21, 22, 45, 60, 70, 80, 90, 100, 120, 130, 140, 150, 160, 171, 184, 201, 212, 220, 320) mit einem Auskleidungsmaterial (2, 23, 48, 64, 75, 81, 91, 123, 133, 143, 154, 165, 172, 183, 200, 210, 221, 327) aus einem lichttransparenten Kunststoffmaterial verbunden sind.

12. Haltevorrichtung nach einem oder mehreren der Ansprüche 1 bis 11,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) mit einer Wandfläche (3, 24, 49, 66, 76, 82, 92, 104, 124, 134, 144, 153, 163, 173, 181, 211, 326) und einem Auskleidungsmaterial (2, 23, 48, 64, 75, 81, 91, 123, 133, 143, 154, 165, 172, 183, 200, 210, 221, 327) aus Standardthermoplasten, vorzugsweise PE, PP, PE-UHMW oder teilfluorierte Thermoplasten, vorzugsweise PVDF, E-CTFE oder hochfluorierten Thermoplasten, vorzugsweise FEP, MFA, PFA oder modifiziertem PTFE, verbunden sind und/oder dass die Beschichtung (10 ,16, 27, 28, 32, 34, 37, 41, 46, 47, 65, 87, 89, 125, 135, 145, 155, 203, 205, 218, 223, 225, 328) aus gleichen Kunststoffmaterialien und bei PE-UHMW und modifiziertem PTFE aus artverwandten Kunststoffmaterialien wie die Wandfläche (3, 24, 49, 66, 76, 82, 92, 104, 124, 134, 144, 153, 163, 173, 181, 211, 326) oder das Auskleidungsmaterial (2, 23, 48, 64, 75, 81, 91, 123, 133, 143, 154, 165, 172, 183, 200, 210, 221, 327) besteht.

13. Haltevorrichtung nach einem oder mehreren der Ansprüche 1 bis 12,
**dadurch gekennzeichnet,**
**dass** die Abstandshalter (1, 4, 20, 21, 22, 45, 60, 70, 80, 90, 100, 120, 130, 140, 150, 160, 171, 184, 201, 212, 220, 320) mit der Wandfläche (3, 24, 49, 66, 76, 82, 92, 104, 124, 134, 144, 153, 163, 173, 181, 211, 326) und/oder dem Auskleidungsmaterial (2, 23, 48, 64, 75, 81, 91, 123, 133, 143, 154, 165, 172, 183, 200, 210, 221, 327) durch eine elektromagnetische Strahlung absorbierende Beschichtung (10, 16, 27, 28, 32, 34, 37, 41, 46, 47, 65, 87, 89, 125, 135, 145, 155, 203, 205, 218, 223, 225, 328) verbindbar sind und/oder dass die Kunststoffmaterialien elektromagnetische Strahlung absorbierende thermostabile Additive enthalten, wobei die Additive aus Partikeln bestehen, welche infrarotsensitiv oder lasersensitiv sind und aus organischen oder anorganischen Materialien mit einer Mindesttemperaturstabilität bestehen, wobei die Temperatur den Verarbeitungstemperaturen der verwendeten Kunststoffmaterialien entspricht und die Partikel in Abhängigkeit des Wärmeeinwirkungsverfahrens, beispielsweise aus Farbmitteln in Form von Farbstoffen oder Farbpigmenten, wie Rußteilchen oder Glimmer mit Zinn-Antimonbeschichtung, bestehen.

14. Haltevorrichtung nach einem oder mehreren der Ansprüche 3 bis 13,
**dadurch gekennzeichnet,**
**dass** die Beschichtung (10, 16, 27, 28, 32, 34, 37, 41, 46, 47, 65, 87, 89, 125, 135, 145, 155, 203, 205, 218, 223, 225, 328) zumindest teilweise aus absorbierenden, thermostabilen Additiven in Form von Partikeln besteht, wobei die Partikel infrarotsensitiv oder lasersensitiv sind und aus organischen oder anorganischen Materialien mit einer Mindesttemperaturstabilität bestehen, die den Verarbeitungstemperaturen der verwendeten Kunststoffmaterialien entsprechen und in Abhängigkeit des Wärmeeinwirkungsverfahrens, beispielsweise aus Farbmitteln in Form von Farbstoffen oder Farbpigmenten, wie Rußteilchen oder Glimmer mit Zink-Antimonbeschichtung, bestehen und/oder dass die Kunststoffmaterialien und Beschichtungen (10, 16, 27, 28, 32, 34, 37, 41, 46, 47, 65, 87, 89, 125, 135, 145, 155, 203, 205, 218, 223, 225, 328) elektromagnetische Strahlung im Wellenlängenbereich von 150 bis 2.500 Nanometer, vorzugsweise 500 bis 1.500 Nanometer, besonders bevorzugt von 800 bis 1.000 Nanometer absorbieren.

15. Haltevorrichtung nach einem oder mehreren der Ansprüche 3 bis 14,
**dadurch gekennzeichnet,**
**dass** für die Plastifizierung des Kunststoffmaterials und die Beschichtung (10 ,16, 27, 28, 32, 34, 37, 41, 46, 47, 65, 87, 89, 125, 135, 145, 155, 203, 205, 218, 223, 225, 328) als elektromagnetische Strahlungsquelle ein Festkörperlaser, Gaslaser, Halbleiterlaser oder eine Infrarotlichtquelle, beispielsweise eine Xenon-Kurzbogenlampe, verwendet wird oder ein CO₂-Laser einsetzbar ist.

16. Haltevorrichtung nach einem oder mehreren der Ansprüche 3 bis 15,
**dadurch gekennzeichnet,**
**dass** für die Plastifizierung der absorbierenden Beschichtung (10, 16, 27, 28, 32, 34, 37, 41, 46, 47, 65, 87, 89, 125, 135, 145, 155, 203, 205, 218, 223, 225, 328,) eine Induktionsschweißvorrichtung einsetzbar ist, wobei die absorbierende Beschichtung (10, 16, 27, 28, 32, 34, 37, 41, 46, 47, 65, 87, 89, 125, 135, 145, 155, 203, 205, 218, 223, 225, 328), das Auskleidungsmaterial (2, 23, 48, 64, 75, 81, 91, 123, 133, 143, 154, 165, 172, 183, 200, 210, 221, 327), die Kopplungselemente und/oder die Abstandshalter (1, 4, 20, 21, 22, 45, 60, 70, 80, 90, 100, 120, 130, 140, 150, 160, 171, 184, 201, 212, 220, 320) zumindest partiell mit einem Füllstoff, beispielsweise Nanopartikeln oder Mahlgut, angereichert sind.

17. Haltevorrichtung nach Anspruch 16,
**dadurch gekennzeichnet,**
**dass** der Füllstoff magnetische, ferrimagnetische, ferromagnetische, antiferromagnetische oder supraparamagnetische Eigenschaften aufweist, wobei der Füllstoff eine mittlere Teilchengröße zwischen 1 und 500 nm, vorzugsweise zwischen 2 und 100 nm, aufweist und/oder dass der Füllstoff nanoskalige, magnetische, oxidische Partikel enthält, die aus aggregierten Primärpartikeln bestehen oder dass der Füllstoff aus Ferriten, Oxiden oder Metallmischoxiden besteht und/oder dass der Füllstoff, beispielsweise die Nanopartikel oder das Mahlgut vorzugsweise aus einem Metall, beispielsweise Nickel, Silber, Gold, Cobalt, Eisen, Aluminium, Zinn, Zink, oder einem Sonderwerkstoff, beispielsweise Zirconium, Palladium, India, Molybdän, Tantal, Rhenium, Titan und/oder aus einem Gemisch oder einer Legierung der aufgezählten Metalle oder Sonderwerkstoffe besteht.

18. Haltevorrichtung nach Anspruch 16,
**dadurch gekennzeichnet,**
**dass** die Füllstoffe inert sind und/oder dass die Nanopartikel oder das Mahlgut keramisch beschichtet sind und/oder dass für die Plastifizierung der absorbierenden Beschichtung (10, 16, 27, 28, 32, 34, 37, 41, 46, 47, 65, 87, 89, 125, 135, 145, 155, 203, 205, 218, 223, 225, 328) eine Mikrowellenstrahlung mit einer Frequenz im Bereich von 1,5 bis 10 GHz, vorzugsweise im Bereich von 2 bis 3 GHz vorgesehen ist.

## Claims

1. Holding device for fixing a lining material (2, 23, 48, 64, 75, 81, 91, 123, 133, 143, 154, 165, 172, 183, 200, 210, 221, 327) to a wall surface (3, 24, 49, 66, 76, 82, 92, 104, 124, 134, 144, 153, 163, 173, 181, 211, 326), in particular a container, apparatus or plant wall, which can be fixed to the wall surface (3, 24, 49, 66, 76, 82, 92, 104, 124, 134, 144, 153, 163, 173, 181, 211, 326) by means of spacers (1, 4, 20, 21, 22, 45, 60, 70, 80, 90, 100, 120, 130, 140, 150, 160, 171, 184, 201, 212,220,320),
**characterized in that**
the spacers (1, 4, 20, 21, 22, 45, 60, 70, 80, 90, 100, 120, 130, 140, 150, 160, 171, 184, 201, 212, 220, 320) consist at least partially of plastics and can be welded with a first contact surface (6, 14, 31, 33, 36, 40, 50, 51, 86, 88, 202, 204, 222, 224) to the wall surface (3, 24, 49, 66, 76, 82, 92, 104, 124, 134, 144, 153, 163, 173, 181, 211, 326), and with a second contact surface (6, 14, 31, 33, 36, 40, 50, 51, 86, 88, 202, 204, 222, 224) to the lining material (2, 23, 48, 64, 75, 81, 91, 123, 133, 143, 154, 165, 172, 183, 200, 210, 221, 327).

2. Holding device according to claim 1,
**characterized in that**
the first contact surface (6, 14, 31, 33, 36, 40, 50, 51, 86, 88, 202, 204, 222, 224) is formed on a front face of the spacers (1, 4, 20, 21, 22, 45, 60, 70, 80, 90, 100, 120, 130, 140, 150, 160, 171, 184, 201, 212, 220, 320), and/or the second contact surface (6, 14, 31, 33, 36, 40, 50, 51, 86, 88, 202, 204, 222, 224) is formed on a diametrically opposed surface or a surface parallel to it.

3. Holding device according to claim 1 or 2,
**characterized in that**
the spacers (1, 4, 20, 21, 22, 45, 60, 70, 80, 90, 100, 120, 130, 140, 150, 160, 171, 184, 201, 212, 220, 320) are designed to be round, oval or as strips which are provided at least in sections with an absorbing coating (10, 16, 27, 28, 32, 34, 37, 41, 46, 47, 65, 87, 89, 125, 135, 145, 155, 203, 205, 218, 223, 225, 328) on the contact surface (6, 14, 31, 33, 36, 40, 50, 51, 86, 88, 202, 204, 222, 224) oriented towards the lining material (2, 23, 48, 64, 75, 81, 91, 123, 133, 143, 154, 165, 172, 183, 200, 210, 221, 327).

4. Holding device according to one or several ones of claims 1 to 3,
**characterized in that**
the contact surface (6, 14, 31, 33, 36, 40, 50, 51, 86, 88, 202, 204, 222, 224) oriented towards the wall surface (3, 24, 49, 66, 76, 82, 92, 104, 124, 134, 144, 153, 163, 173, 181, 211, 326) is provided at least in sections with an absorbing coating (10, 16, 27, 28, 32, 34, 37, 41, 46, 47, 65, 87, 89, 125, 135, 145, 155, 203, 205, 218, 223, 225, 328), and/or the spacers (1, 4, 20, 21, 22, 45, 60, 70, 80, 90, 100, 120, 130, 140, 150, 160, 171, 184, 201, 212, 220, 320) in their cross-section form a U-profile, a U-profile with outgoing leg ends and internal or external contact surfaces (6, 14, 31, 33, 36, 40, 50, 51, 86, 88, 202, 204, 222, 224), a T-profile, a trapezoidal profile with a broad base and outgoing leg ends, or a hat profile, or consist of a preferably full-faced rectangular profile or square profile.

5. Holding device according to claim 4,
**characterized in that**
the spacers (1, 4, 20, 21, 22, 45, 60, 70, 80, 90, 100, 120, 130, 140, 150, 160, 171, 184, 201, 212, 220, 320) are designed in two parts, where a first spacer part (61, 62, 71, 72, 73, 74, 93, 94, 101, 102, 121, 122, 131, 132, 141, 142, 151, 152, 161, 162, 213, 214, 321, 323) is connected with the wall surface (3, 24, 49, 66, 76, 82, 92, 104, 124, 134, 144, 153, 163, 173, 181, 211, 326), and a second spacer part is connected with the lining material (2, 23, 48, 64, 75, 81, 91, 123, 133, 143, 154, 165, 172, 183, 200, 210, 221, 327), and both spacer parts (61, 62, 71, 72, 73, 74, 93, 94, 101, 102, 121, 122, 131, 132, 141, 142, 151, 152, 161, 162, 213, 214, 321, 323) are connected to each other by a coupling layer (74, 95, 128, 136, 146).

6. Holding device according to claim 5,
**characterized in that**
the coupling layer (63, 74, 95, 128, 136, 146) consists of a glue or an adhesive layer (8, 68, 85, 106), or of first and second coupling elements connected to each other with a positive and/or a non-positive fit, or that the coupling layer (63, 74, 95, 128, 136, 146) consists of a dovetailed toothing that can be pressed, and/or that the spacers (1, 4, 20, 21, 22, 45, 60, 70, 80, 90, 100, 120, 130, 140, 150, 160, 171, 184, 201, 212, 220, 320) comprise to one side of the coupling elements, at least one absorbing coating (10 ,16, 27, 28, 32, 34, 37, 41, 46, 47, 65, 87, 89, 125, 135, 145, 155, 203, 205, 218, 223, 225, 328) which can be welded by electromagnetic radiation.

7. Holding device according to claim 6,
**characterized in that**
the coupling elements are designed to be T-shaped, mushroom-shaped, U-shaped with outgoing legs, plate-like, waved with a straight central base, S-shaped or angular, where round or strip-like coupling elements can be used.

8. Holding device according to one or several ones of claims 1 to 7,
**characterized in that**
the spacers (1, 4, 20, 21, 22, 45, 60, 70, 80, 90, 100, 120, 130, 140, 150, 160, 171, 184, 201, 212, 220, 320) can be received in passages (17, 216) of the lining material (2, 23, 48, 64, 75, 81, 91, 123, 133, 143, 154, 165, 172, 183, 200, 210, 221, 327), and/or the wall surface (3, 24, 49, 66, 76, 82, 92, 104, 124, 134, 144, 153, 163, 173, 181, 211, 326) consists of a lined, preferably thin plastic material which is glued onto a metal or external GFRP wall, and/or the spacers (1, 4, 20, 21, 22, 45, 60, 70, 80, 90, 100, 120, 130, 140, 150, 160, 171, 184, 201, 212, 220, 320) are connected to a wall surface (3, 24, 49, 66, 76, 82, 92, 104, 124, 134, 144, 153, 163, 173, 181, 211, 326) which consists of a stable supporting plastic wall or metal wall.

9. Holding device according to one or several ones of claims 1 to 8,
**characterized in that**
a first spacer (1, 4, 20, 21, 22, 45, 60, 70, 80, 90, 100, 120, 130, 140, 150, 160, 171, 184, 201, 212, 220, 320), if it is embodied in two parts with a positive fit of metal, and a second spacer (1, 4, 20, 21, 22, 45, 60, 70, 80, 90, 100, 120, 130, 140, 150, 160, 171, 184, 201, 212, 220, 320) consists of plastics, and/or between the lining material (2, 23, 48, 64, 75, 81, 91, 123, 133, 143, 154, 165, 172, 183, 200, 210, 221, 327) and the wall surface (3, 24, 49, 66, 76, 82, 92, 104, 124, 134, 144, 153, 163, 173, 181, 211, 326), a space (18, 207, 227) is formed.

10. Holding device according to one or several ones of claims 1 to 9,
**characterized in that**
a spacer, for example a plastic grating, a plastic gauze, or an open-pored foam is inserted in the space (18, 207, 227).

11. Holding device according to one or several ones of claims 1 to 10,
**characterized in that**
the spacers (1, 4, 20, 21, 22, 45, 60, 70, 80, 90, 100, 120, 130, 140, 150, 160, 171, 184, 201, 212, 220, 320) consist of a light-transparent plastic material, and/or the spacers (1, 4, 20, 21, 22, 45, 60, 70, 80, 90, 100, 120, 130, 140, 150, 160, 171, 184, 201, 212, 220, 320) are connected to wall surfaces (3, 24, 49, 66, 76, 82, 92, 104, 124, 134, 144, 153, 163, 173, 181, 211, 326) of a light-absorbing plastic material, and/or the spacers (1, 4, 20, 21, 22, 45, 60, 70, 80, 90, 100, 120, 130, 140, 150, 160, 171, 184, 201, 212, 220, 320) are connected with a lining material (2, 23, 48, 64, 75, 81, 91, 123, 133, 143, 154, 165, 172, 183, 200, 210, 221, 327) of a light-transparent plastic material.

12. Holding device according to one or several ones of claims 1 to 11,
**characterized in that**
the spacers (1, 4, 20, 21, 22, 45, 60, 70, 80, 90, 100, 120, 130, 140, 150, 160, 171, 184, 201, 212, 220, 320) are connected to a wall surface (3, 24, 49, 66, 76, 82, 92, 104, 124, 134, 144, 153, 163, 173, 181, 211, 326) and a lining material (2, 23, 48, 64, 75, 81, 91, 123, 133, 143, 154, 165, 172, 183, 200, 210, 221, 327) of standard thermoplastics, preferably PE, PP, PE-UHMW or partly fluorinated thermoplastics, preferably PVDF, E-CTFE, or highly fluorinated thermoplastics, preferably FEP, MFA, PFA or modified PTFE, and/or that the coating (10 ,16, 27, 28, 32, 34, 37, 41, 46, 47, 65, 87, 89, 125, 135, 145, 155, 203, 205, 218, 223, 225, 328) consists of identical plastic materials, and in case of PE-UHMW and modified PTFE, of plastic materials similar to those of the wall surface (3, 24, 49, 66, 76, 82, 92, 104, 124, 134, 144, 153, 163, 173, 181, 211, 326) or the lining material (2, 23, 48, 64, 75, 81, 91, 123, 133, 143, 154, 165, 172, 183, 200, 210, 221, 327).

13. Holding device according to one or several ones of claims 1 to 12,
**characterized in that**
the spacers (1, 4, 20, 21, 22, 45, 60, 70, 80, 90, 100, 120, 130, 140, 150, 160, 171, 184, 201, 212, 220, 320) can be connected with the wall surface (3, 24, 49, 66, 76, 82, 92, 104, 124, 134, 144, 153, 163, 173, 181, 211, 326) and/or the lining material (2, 23, 48, 64, 75, 81, 91, 123, 133, 143, 154, 165, 172, 183, 200, 210, 221, 327) by a coating (10, 16, 27, 28, 32, 34, 37, 41, 46, 47, 65, 87, 89, 125, 135, 145, 155, 203, 205, 218, 223, 225, 328) absorbing electromagnetic radiation, and/or the plastic materials contain thermostable additives absorbing electromagnetic radiation, wherein the additives consist of particles which are infrared-sensitive or laser-sensitive and consist of organic or inorganic materials with a minimum temperature resistance, the temperature corresponding to the processing temperatures of the employed plastic materials, and the particles consisting, depending on the method of the action of heat, for example of colorants in the form of dyes or coloured pigments, such as carbon particles or mica with a tin-antimony coating.

14. Holding device according to one or several ones of claims 3 to 13,
**characterized in that**
the coating (10, 16, 27, 28, 32, 34, 37, 41, 46, 47, 65, 87, 89, 125, 135, 145, 155, 203, 205, 218, 223, 225, 328) at least partially consists of absorbing, thermostable additives in the form of particles, where the particles are infrared-sensitive or laser-sensitive and consist of organic or inorganic materials with a minimum temperature resistance corresponding to the processing temperatures of the employed plastic materials and consist, depending on the method of the action of heat, for example of colorants in the form of dyes or coloured pigments, such as carbon particles or mica with a tin-antimony coating, and/or the plastic materials and coatings (10, 16, 27, 28, 32, 34, 37, 41, 46, 47, 65, 87, 89, 125, 135, 145, 155, 203, 205, 218, 223, 225, 328) absorb electromagnetic radiation within a wavelength range of 150 to 2,500 nanometres, preferably 500 to 1,500 nanometres, particularly preferred from 800 to 1,000 nanometres.

15. Holding device according to one or several ones of claims 3 to 14,
**characterized in that**
for the melting of the plastic material and the coating (10, 16, 27, 28, 32, 34, 37, 41, 46, 47, 65, 87, 89, 125, 135, 145, 155, 203, 205, 218, 223, 225, 328), , a solid state laser, a gas laser, a semiconductor laser, or an infrared light source, for example a xenon short arc lamp is used as a source of electromagnetic radiation, or a CO₂ laser can be employed.

16. Holding device according to one or several ones of claims 3 to 15,
**characterized in that**
for melting the absorbing coating (10,16, 27, 28, 32, 34, 37, 41, 46, 47, 65, 87, 89, 125, 135, 145, 155, 203, 205, 218, 223, 225, 328), an induction welding device can be employed, wherein the absorbing coating (10,16, 27, 28, 32, 34, 37, 41, 46, 47, 65, 87, 89, 125, 135, 145, 155, 203, 205, 218, 223, 225, 328), the lining material (2, 23, 48, 64, 75, 81, 91, 123, 133, 143, 154, 165, 172, 183, 200, 210, 221, 327), the coupling elements and/or the spacers (1, 4, 20, 21, 22, 45, 60, 70, 80, 90, 100, 120, 130, 140, 150, 160, 171, 184, 201, 212, 220, 320) are at least partially enriched with a filler, for example nanoparticles or ground stock.

17. Holding device according to claim 16,
**characterized in that**
the filler comprises magnetic, ferrimagnetic, ferromagnetic, antiferromagnetic or supraparamagnetic properties, wherein the filler has a mean particle size between 1 and 500 nm, preferably between 2 and 100 nm, and/or the filler contains nano-scaled magnetic, oxidic particles consisting of aggregated primary particles, or the filler consists of ferrites, oxides, or mixed metal oxides, and/or the filler, for example the nanoparticles or the ground stock, preferably consists of a metal, for example nickel, silver, gold, cobalt, iron, aluminium, tin, zinc, or a special material, for example zirconium, palladium, india, molybdenum, tantalum, rhenium, titanium, and/or of a mixture or an alloy of the listed metals or special materials.

18. Holding device according to claim 16,
**characterized in that**
the fillers are inert, and/or the nanoparticles or the ground stock are ceramically coated, and/or that for melting the absorbing coating (10, 16, 27, 28, 32, 34, 37, 41, 46, 47, 65, 87, 89, 125, 135, 145, 155, 203, 205, 218, 223, 225, 328), microwave radiation of a frequency within a range of 1.5 to 10 GHz, preferably within a range of 2 to 3 GHz, is provided.

## Revendications

1. Dispositif de maintien pour la fixation d'un matériau de revêtement (2, 23, 48, 64, 75, 81, 91, 123, 133, 143, 154, 165, 172, 183, 200, 210, 221, 327) sur une surface de paroi (3, 24, 49, 66, 76, 82, 92, 104, 124, 134, 144, 153, 163, 173, 181, 211, 326), en particulier une paroi de contenant, d'appareil ou de dispositif, qui peut être fixé à la surface de paroi (3, 24, 49, 66, 76, 82, 92, 104, 124, 134, 144, 153, 163, 173, 181, 211, 326) au moyen d'espaceurs (1, 4, 20, 21, 22, 45, 60, 70, 80, 90, 100, 120, 130, 140, 150, 160, 171, 184, 201, 212, 220, 320),
**caractérisé par le fait que**
les espaceurs (1, 4, 20, 21, 22, 45, 60, 70, 80, 90, 100, 120, 130, 140, 150, 160, 171, 184, 201, 212, 220, 320) sont constitués au moins partiellement de matière plastique et peuvent être soudés par une première surface de contact (6, 14, 31, 33, 36, 40, 50, 51, 86, 88, 202, 204, 222, 224) à la surface de paroi (3, 24, 49, 66, 76, 82, 92, 104, 124, 134, 144, 153, 163, 173, 181, 211, 326) et par une seconde surface de contact (6, 14, 31, 33, 36, 40, 50, 51, 86, 88, 202, 204, 222, 224) au matériau de revêtement (2, 23, 48, 64, 75, 81, 91, 123, 133, 143, 154, 165, 172, 183, 200, 210, 221, 327).

2. Dispositif de maintien selon la revendication 1,
**caractérisé par le fait que**
la première surface de contact (6, 14, 31, 33, 36, 40, 50, 51, 86, 88, 202, 204, 222, 224) est formée sur une face frontale des espaceurs (1, 4, 20, 21, 22, 45, 60, 70, 80, 90, 100, 120, 130, 140, 150, 160, 171, 184, 201, 212, 220, 320) et/ou que la seconde surface de contact (6, 14, 31, 33, 36, 40, 50, 51, 86, 88, 202, 204, 222, 224) est formée sur une face frontale diamétralement opposée ou sur une surface y étant parallèle.

3. Dispositif de maintien selon la revendication 1 ou 2,
**caractérisé par le fait que**
les espaceurs (1, 4, 20, 21, 22, 45, 60, 70, 80, 90, 100, 120, 130, 140, 150, 160, 171, 184, 201, 212, 220, 320) sont agencés sous forme ronde, sous forme ovale ou sous forme de bande, qui sont pourvus, sur la surface de contact (6, 14, 31, 33, 36, 40, 50, 51, 86, 88, 202, 204, 222, 224) orientée vers le matériau de revêtement (2, 23, 48, 64, 75, 81, 91, 123, 133, 143, 154, 165, 172, 183, 200, 210, 221, 327), au moins par section d'un revêtement absorbant (10 ,16, 27, 28, 32, 34, 37, 41, 46, 47, 65, 87, 89, 125, 135, 145, 155, 203, 205, 218, 223, 225, 328).

4. Dispositif de maintien selon l'une ou plusieurs des revendications 1 à 3,
**caractérisé par le fait que**
la surface de contact (6, 14, 31, 33, 36, 40, 50, 51, 86, 88, 202, 204, 222, 224) orientée vers la surface de paroi (3, 24, 49, 66, 76, 82, 92, 104, 124, 134, 144, 153, 163, 173, 181, 211, 326) est pourvue au moins par section d'un revêtement absorbant (10, 16, 27, 28, 32, 34, 37, 41, 46, 47, 65, 87, 89, 125, 135, 145, 155, 203, 205, 218, 223, 225, 328) et/ou que les espaceurs (1, 4, 20, 21, 22, 45, 60, 70, 80, 90, 100, 120, 130, 140, 150, 160, 171, 184, 201, 212, 220, 320) forment en section un profilé en U, un profilé en U avec des extrémités de branches débouchantes et des surfaces de contact (6, 14, 31, 33, 36, 40, 50, 51, 86, 88, 202, 204, 222, 224) intérieures ou extérieures, un profilé en T, un profilé trapézoïdal, un profilé en V avec une large surface de base et des extrémités de branches débouchantes ou un profilé chape, ou sont constitués d'un profilé rectangulaire ou carré préférentiellement sur toute la surface.

5. Dispositif de maintien selon la revendication 4,
**caractérisé par le fait que**
les espaceurs (1, 4, 20, 21, 22, 45, 60, 70, 80, 90, 100, 120, 130, 140, 150, 160, 171, 184, 201, 212, 220, 320) sont formés de deux parties, une première partie d'espacement (61, 62, 71, 72, 73, 74, 93, 94, 101, 102, 121, 122, 131, 132, 141, 142, 151, 152, 961, 162, 213, 214, 321, 323) étant reliée à la surface de paroi (3, 24, 49, 66, 76, 82, 92, 104, 124, 134, 144, 153, 163, 173, 181, 211, 326) et une seconde partie d'espacement étant reliée au matériau de revêtement (2, 23, 48, 64, 75, 81, 91, 123, 133, 143, 154, 165, 172, 183, 200, 210, 221, 327) et les deux parties d'espacement (61, 62, 71, 72, 73, 74, 93, 94, 101, 102, 121, 122, 131, 132, 141, 142, 151, 152, 161, 162, 213, 214, 321, 323) étant reliées entre elles par une couche d'accouplement (74, 95, 128, 136, 146).

6. Dispositif de maintien selon la revendication 5,
**caractérisé par le fait que**
la couche d'accouplement (63, 74, 95, 128, 136, 146) est constituée d'une couche de colle ou d'adhésif (8, 68, 85, 106) ou de premiers et de seconds éléments d'accouplement reliés entre eux par complémentarité de forme et/ou à force ou que la couche d'accouplement (63, 74, 95, 128, 136, 146) est constituée d'une denture en queue d'aronde pouvant être comprimée, et/ou que les espaceurs (1, 4, 20, 21, 22, 45, 60, 70, 80, 90, 100, 120, 130, 140, 150, 160, 171, 184, 201, 212, 220, 320) présentent, sur une face des éléments d'accouplement, au moins un revêtement absorbant (10 ,16, 27, 28, 32, 34, 37, 41, 46, 47, 65, 87, 89, 125, 135, 145, 155, 203, 205, 218, 223, 225, 328), qui peut être soudé par un rayonnement électromagnétique.

7. Dispositif de maintien selon la revendication 6,
**caractérisé par le fait que**
les éléments d'accouplement ont une forme de T, une forme de champignon, une forme de U avec des branches débouchantes, une forme de disque, une forme ondulée avec une base intermédiaire droite, une forme de S ou une forme angulaire, des éléments d'accouplement ronds ou en forme de bande pouvant être utilisés.

8. Dispositif de maintien selon l'une ou plusieurs des revendications 1 à 7,
**caractérisé par le fait que**
les espaceurs (1, 4, 20, 21, 22, 45, 60, 70, 80, 90, 100, 120, 130, 140, 150, 160, 171, 184, 201, 212, 220, 320) peuvent être reçus dans des passages (17, 216) du matériau de revêtement (2, 23, 48, 64, 75, 81, 91, 123, 133, 143, 154, 165, 172, 183, 200, 210, 221, 327), et/ou que la surface de paroi (3, 24, 49, 66, 76, 82, 92, 104, 124, 134, 144, 153, 163, 173, 181, 211, 326) est constituée d'une matière plastique contre-collée, préférentiellement fine, qui est collée sur une paroi extérieure en métal ou en PRFV et/ou que les espaceurs (1, 4, 20, 21, 22, 45, 60, 70, 80, 90, 100, 120, 130, 140, 150, 160, 171, 184, 201, 212, 220, 320) sont reliés à une surface de paroi (3, 24, 49, 66, 76, 82, 92, 104, 124, 134, 144, 153, 163, 173, 181, 211, 326), qui est constituée d'une paroi de matière plastique ou d'une paroi métallique constituant un support stable.

9. Dispositif de maintien selon l'une ou plusieurs des revendications 1 à 8,
**caractérisé par le fait que**
un premier espaceur (1, 4, 20, 21, 22, 45, 60, 70, 80, 90, 100, 120, 130, 140, 150, 160, 171, 184, 201, 212, 220, 320) est constitué de métal en cas de réalisation des espaceurs en deux parties, avec connexion par complémentarité de forme et un second espaceur (1, 4, 20, 21, 22, 45, 60, 70, 80, 90, 100, 120, 130, 140, 150, 160, 171, 184, 201, 212, 220, 320) est constitué de matière plastique et/ou qu'un espace intermédiaire (18, 207, 227) est formé entre le matériau de revêtement (2, 23, 48, 64, 75, 81, 91, 123, 133, 143, 154, 165, 172, 183, 200, 210, 221, 327) et la surface de paroi (3, 24, 49, 66, 76, 82, 92, 104, 124, 134, 144, 153, 163, 173, 181, 211, 326).

10. Dispositif de maintien selon l'une ou plusieurs des revendications 1 à 9,
**caractérisé par le fait**
**qu'**un élément d'écartement, par exemple une grille en matière plastique, une gaze synthétique ou une mousse à pores ouverts est inséré dans l'espace intermédiaire (18, 207, 227).

11. Dispositif de maintien selon l'une ou plusieurs des revendications 1 à 10,
**caractérisé par le fait que**
les espaceurs (1, 4, 20, 21, 22, 45, 60, 70, 80, 90, 100, 120, 130, 140, 150, 160, 171, 184, 201, 212, 220, 320) sont constitués d'une matière plastique transparente à la lumière et/ou que les espaceurs (1, 4, 20, 21, 22, 45, 60, 70, 80, 90, 100, 120, 130, 140, 150, 160, 171, 184, 201, 212, 220, 320) sont reliés à des surfaces de paroi (3, 24, 49, 66, 76, 82, 92, 104, 124, 134, 144, 153, 163, 173, 181, 211, 326) en matière plastique absorbant la lumière et/ou que les espaceurs (1, 4, 20, 21, 22, 45, 60, 70, 80, 90, 100, 120, 130, 140, 150, 160, 171, 184, 201, 212, 220, 320) sont reliés à un matériau de revêtement (2, 23, 48, 64, 75, 81, 91, 123, 133, 143, 154, 165, 172, 183, 200, 210, 221, 327) en matière plastique transparente à la lumière.

12. Dispositif de maintien selon l'une ou plusieurs des revendications 1 à 11,
**caractérisé par le fait que**
les espaceurs (1, 4, 20, 21, 22, 45, 60, 70, 80, 90, 100, 120, 130, 140, 150, 160, 171, 184, 201, 212, 220, 320) sont reliés à une surface de paroi (3, 24, 49, 66, 76, 82, 92, 104, 124, 134, 144, 153, 163, 173, 181, 211, 326) et à un matériau de revêtement (2, 23, 48, 64, 75, 81, 91, 123, 133, 143, 154, 165, 172, 183, 200, 210, 221, 327) en matière thermoplastique standard, préférentiellement en PE, PP, PE-UHMW ou en matière thermoplastique partiellement fluorée, préférentiellement en PVDF, E-CTFE ou en matière thermoplastique à haute teneur en fluor, préférentiellement en FEP, MFA, PFA ou en PTFE modifié, et/ou que le revêtement (10 ,16, 27, 28, 32, 34, 37, 41, 46, 47, 65, 87, 89, 125, 135, 145, 155, 203, 205, 218, 223, 225, 328) est constitué de matières plastiques identiques et, pour le PE-UHMW et le PTFE, de matières plastiques similaires à celles de la surface de paroi (3, 24, 49, 66, 76, 82, 92, 104, 124, 134, 144, 153, 163, 173, 181, 211, 326) ou du matériau de revêtement (2, 23, 48, 64, 75, 81, 91, 123, 133, 143, 154, 165, 172, 183, 200,210,221,327).

13. Dispositif de maintien selon l'une ou plusieurs des revendications 1 à 12,
**caractérisé par le fait que**
les espaceurs (1, 4, 20, 21, 22, 45, 60, 70, 80, 90, 100, 120, 130, 140, 150, 160, 171, 184, 201, 212, 220, 320) peuvent être reliés à la surface de paroi (3, 24, 49, 66, 76, 82, 92, 104, 124, 134, 144, 153, 163, 173, 181, 211, 326) et/ou au matériau de revêtement (2, 23, 48, 64, 75, 81, 91, 123, 133, 143, 154, 165, 172, 183, 200, 210, 221, 327) par un revêtement absorbant un rayonnement électromagnétique (10, 16, 27, 28, 32, 34, 37, 41, 46, 47, 65, 87, 89, 125, 135, 145, 155, 203, 205, 218, 223, 225, 328) et/ou que les matières plastiques contiennent des additifs thermostables absorbant le rayonnement électromagnétique, les additifs étant constitués de particules qui sont sensibles à la lumière infrarouge ou sensibles au laser et qui sont constitués de matériaux organiques ou inorganiques à stabilité en température minimum, la température correspondant aux températures de traitement des matières plastiques utilisées et les particules étant constituées, en fonction du procédé par action thermique, par exemple d'agents colorants sous la forme de colorants ou de pigments colorés, comme de la suie ou du mica avec un revêtement étain-antimoine.

14. Dispositif de maintien selon l'une ou plusieurs des revendications 3 à 13,
**caractérisé par le fait**
**que** le revêtement (10, 16, 27, 28, 32, 34, 37, 41, 46, 47, 65, 87, 89, 125, 135, 145, 155, 203, 205, 218, 223, 225, 328) est constitué au moins partiellement d'additifs absorbants thermostables sous la forme de particules, les particules étant sensibles à la lumière infrarouge ou sensibles au laser et étant constituées de matériaux organiques ou inorganiques à stabilité en température minimum, qui correspondent aux températures de traitement des matières plastiques utilisées et, en fonction du procédé par action thermique, sont constituées par exemple d'agents colorants sous la forme de colorants ou de pigments colorés, comme de la suie ou du mica avec un revêtement zinc-antimoine et/ou que les matières plastiques et les revêtements (10 , 16, 27, 28, 32, 34, 37, 41, 46, 47, 65, 87, 89, 125, 135, 145, 155, 243, 205, 218, 223, 225, 328) absorbent le rayonnement électromagnétique dans la plage de longueur d'onde de 150 à 2.500 nanomètres, préférentiellement de 500 à 1.500 nanomètres, particulièrement préférentiellement de 800 à 1.000 nanomètres.

15. Dispositif de maintien selon l'une ou plusieurs des revendications 3 à 14,
**caractérisé par le fait**
**qu'**un laser à solide, un laser à verre, un laser semiconducteur ou une source de lumière infrarouge, par exemple une lampe à arc court au xénon, sont utilisés comme source de rayonnement électromagnétique ou un laser CO₂ peut être utilisé pour la plastification de la matière plastique et le revêtement (10, 16, 27, 28, 32, 34, 37, 41, 46, 47, 65, 87, 89, 125, 135, 145, 155, 203, 205, 218, 223, 225, 328).

16. Dispositif de maintien selon l'une ou plusieurs des revendications 3 à 15,
**caractérisé par le fait que**
un dispositif de soudage par induction peut être utilisé pour la plastification du revêtement absorbant (10 , 16, 27, 28, 32, 34, 37, 41, 46, 47, 65, 87, 89, 125, 135, 145, 155, 203, 205, 218, 223, 225, 328), le revêtement absorbant (10, 16, 27, 28, 32, 34, 37, 41, 46, 47, 65, 87, 89, 125, 135, 145, 155, 203, 205, 218, 223, 225, 328), le matériau de revêtement (2, 23, 48, 64, 75, 81, 91, 123, 133, 143, 154, 165, 172, 183, 200, 210, 221, 327), les éléments d'accouplement et/ou les espaceurs (1, 4, 20, 21, 22, 45, 60, 70, 80, 90, 100, 120, 130, 140, 150, 160, 171, 184, 201, 212, 220, 320) étant au moins partiellement enrichis en matière de charge, par exemple en nanoparticules ou en matière moulue.

17. Dispositif de maintien selon la revendication 16,
**caractérisé par le fait que**
la matière de charge présente des propriétés magnétiques, ferrimagnétiques, ferromagnétiques, antiferromagnétiques ou supraparamagnétiques, la matière de charge présentant une taille de particule moyenne située entre 1 et 500 nm, préférentiellement entre 2 et 100 nm, et/ou que la matière de charge contenant des particules oxydées magnétiques nanométriques constituées de particules primaires agrégées ou que la matière de charge est constituée de ferrites, d'oxydes ou d'oxydes métalliques mixtes et/ou que la matière de charge, par exemple les nanoparticules ou la matière moulue, est constituée préférentiellement de métal, par exemple de nickel, d'argent, d'or, de cobalt, de fer, d'aluminium, d'étain, de zinc, ou de matériau spécial, par exemple de zirconium, de palladium, d'indium, de molybdène, de tantale, de rhénium, de titane et/ou d'un mélange ou d'un alliage des métaux ou des matières spéciales mentionnés.

18. Dispositif de maintien selon la revendication 16,
**caractérisé par le fait que**
les matières de charge sont inertes et/ou que les nanoparticules ou la matière moulue sont recouvertes de céramique et/ou qu'un rayonnement micro-ondes ayant une fréquence située dans la plage de 1,5 à 10 GHz, préférentiellement dans la plage de 2 à 3 GHz est prévu pour la plastification du revêtement absorbant (10, 16, 27, 28, 32, 34, 37, 41, 46, 47, 65, 87, 89, 125, 135, 145, 155, 203, 205, 218, 223, 225, 328).
